(19) Europäisches Patentamt

European Patent Office

Office européen des brevets

(11) **EP 4 729 887 A1**

## (12) EUROPEAN PATENT APPLICATION

(43) Date of publication:
**22.04.2026 Bulletin 2026/17**

(21) Application number: **24207642.0**

(22) Date of filing: **18.10.2024**

(51) International Patent Classification (IPC):
**G01C 21/34** (2006.01)      **G01C 21/00** (2006.01)

(52) Cooperative Patent Classification (CPC):
**G01C 21/3446; G01C 21/3878; G01C 21/3881**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(72) Inventors:
• **MUND, Heiko**
  **1011 AC Amsterdam (NL)**
• **SCHARMANN, Hannes**
  **1011 AC Amsterdam (NL)**

(74) Representative: **Swindell & Pearson Limited
48 Friar Gate
Derby DE1 1GY (GB)**

(71) Applicant: **TomTom Navigation B.V.
1011 AC Amsterdam (NL)**

## (54) METHOD, APPARATUS AND COMPUTER PROGRAM FOR GENERATING MAP DATA

(57) Certain examples provide a computer-implemented method to determine a sub-graph of a graph consisting of nodes and edges, wherein the graph is representative of a digital map (100) of segments of navigable elements of a network of navigable elements in a geographical region, the method comprising: defining a plurality of triples of lines (M, L, N), wherein for each of the triples of lines a second line (L) is between a first line (M) and a third line (N); calculating, for each triple of lines, minimum cost paths between nodes or edges ($V_M$) intersecting the first line and nodes or edges intersecting the third line ($V_N$); determining access nodes or edges for each triple of lines based on nodes or edges intersecting the second line of the triple which are part of any of the calculated minimum cost paths between the first and third line of the triple; calculating minimum cost paths between the access nodes or edges of each of the plurality of triples of lines; and determining the sub-graph based at least in part on collecting each of the nodes and edges which are part of any of the calculated minimum cost paths between the access nodes or edges.

FIG. 8

EP 4 729 887 A1

**Description**

TECHNOLOGICAL FIELD

Examples of the present disclosure relate to generating map data, in particular a method, an apparatus and a computer program for generating map data. Some examples, though without prejudice to the foregoing, relate to generating map data for use in calculating routes.

BACKGROUND

Conventional methods for generating map data (not least for example a digital map or electronic map data, representative of a road network, for use: in performing route calculations, road classification, and/or for map display on navigation devices as well as other applications) are not always optimal.

It is useful to provide a method, apparatus and computer program to improve the generation of map data.

In some circumstances it can be desirable to improve the generation of map data for enabling an improvement in route calculation. In some circumstances it can be desirable to improve the generation of map data for enabling an improvement in road classification. In some circumstances it can be desirable to improve the generation of map data for enabling an improvement in map display.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

BRIEF SUMMARY

The scope of protection sought for various embodiments of the invention is set out by the claims.

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to various, but not necessarily all, examples of the disclosure there is provided a computer-implemented method to determine a sub-graph of a graph consisting of nodes and edges, wherein the graph is representative of a digital map of segments of navigable elements of a network of navigable elements in a geographical region, the method comprising:

defining a plurality of triples of lines, wherein for each of the triples of lines a second line is between a first line and a third line;

calculating, for each triple of lines, minimum cost paths between nodes or edges intersecting the first line and nodes or edges intersecting the third line;

determining access nodes or edges for each triple of lines based on nodes or edges intersecting the second line of the triple which are part of any of the calculated minimum cost paths between the first and third line of the triple;

calculating minimum cost paths between the access nodes or edges of each of the plurality of triples of lines; and

determining the sub-graph based at least in part on collecting each of the nodes and edges which are part of any of the calculated minimum cost paths between the access nodes or edges.

According to various, but not necessarily all, examples of the disclosure there is provided a computer-implemented method to determine a sub-graph of a graph consisting of nodes and edges, wherein the graph is representative of a digital map (100) of segments of navigable elements of a network of navigable elements in a geographical region, the method comprising:

partitioning the graph into a plurality of cells ($R_1$) comprising nodes and edges;

defining an inner ring ($\overline{R}_1$), comprising nodes and edges, around each cell;

defining an outer ring ($\hat{R}_1$), comprising nodes and edges, around the inner ring of each cell;

calculating, for each cell, minimum cost paths between boundary nodes or edges of each cell and boundary nodes or edges of the outer ring of the respective cell;

determining access nodes or edges ($A_{R_1}$) for each cell based on boundary nodes or edges of the inner ring for the respective cell which are part of any of the calculated minimum cost paths for the respective cell;

calculating minimum cost paths between the access nodes or edges of each of the plurality of cells; and

determining the sub-graph based at least in part on collecting each of the nodes and edges which are part of any of the calculated minimum cost paths between the access nodes or edges.

According to various, but not necessarily all, examples of the disclosure there is provided an apparatus comprising processing circuitry configured to perform any of the above-mentioned methods.

According to various, but not necessarily all, examples of the disclosure there is provided a chipset, module, circuitry, device and/or system comprising means for performing any of the above-mentioned methods.

According to various, but not necessarily all, examples of the disclosure there is provided a computer program comprising instructions, which when executed by an apparatus, cause the apparatus to perform any of the above-mentioned methods.

According to various, but not necessarily all, examples of the disclosure there is provided an apparatus comprising:

at least one processor; and
at least one memory storing instructions that, when executed by the at least one processor, cause the apparatus to perform any of the above-mentioned methods.

According to various, but not necessarily all, examples of the disclosure there is provided a non-transitory computer readable medium encoded with instructions that, when executed by at least one processor, causes any of the above-mentioned methods to be performed.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, each triple of lines consists of three non-intersecting lines.

In some but not necessarily all examples, the triples of lines are part of a pre-defined grid.

In some but not necessarily all examples, the triples of lines partition the graph into a plurality of cells comprising nodes and edges.

In some but not necessarily all examples, for each cell, which is determined at least partially by the first line of a corresponding triple of lines, there following is defined:

an inner ring, comprising nodes and edges, around the cell and associated with the second line of the corresponding triple of lines;
an outer ring, comprising nodes and edges, around the inner ring of the cell and associated with the third line of the corresponding triple of lines.

In some but not necessarily all examples, calculating the minimum cost paths is based at least in part on a cost function involving a cost parameter; and optionally: wherein the cost parameter is based at least in part on one or more of the following:

traversal distance;
traversal time;
energy consumption;
scenic value; and
toll costs.

In some but not necessarily all examples, there is provided a method to calculate a route from a start point to a destination point, the method comprising:

using, for a part of the route to be calculated that is outside a first distance from the start point and the destination point, the sub-graph determined by any of the above methods; and
using, for a part of the route to be calculated that is inside a second distance from the start point or the destination point, the graph.

In some but not necessarily all examples, there is provided a method to calculate a route from a start point to a destination point on a graph of nodes and edges comprising:

using nodes and/or edges of the graph to calculate a part of the route that is between the start point and the inner ring around a cell of the graph in which the start point is located or between the destination point and the inner ring around a cell of the graph in which the destination point is located, and
using nodes and/or edges of the sub-graph as determined by any of the above methods to calculate another part of the route.

In some but not necessarily all examples, there is provided a method to determine a plurality of sub-graphs of a graph based on a plurality of pluralities of triples of lines by any of the above methods.

In some but not necessarily all examples, the determined plurality of sub-graphs constitute a hierarchy of sub-graphs.

In some but not necessarily all examples, there is provided a method to calculate a route from a start point to a destination point on a graph of nodes and edges with a hierarchy of levels of sub-graphs determined by the above method, the method further comprising:

using, for a part of the route to be calculated that is:

outside of an inner ring around a cell, of a sub-graph of a first level, in which the start or destination point is located, and
inside of an inner ring around a cell, of a sub-graph of a higher level, in which the start or destination point is located

the sub-graph of the first level to calculate the part of the route.

In some but not necessarily all examples, there is provided a method to render a graph or a road map, the method comprising:

displaying only nodes and edges which belong to selected one or more sub-graphs determined by any of the above methods; or
displaying nodes and edges, which belong to selected one or more sub-graphs determined by any of the above-mentioned methods, in different styles, depending on the sub-graph to which they belong.

In some but not necessarily all examples, there is provided a method to determine a classification of nodes and/or edges of a graph, the method comprising:
determining nodes and/or edges as belonging to the same class if they are part of the same sub-graph of the plurality of sub-graphs determined by the above method.

In some but not necessarily all examples, there is provided a method to calculate a route from a start point to a destination point on a graph of nodes and edges with a classification of nodes and/or edges determined by the above method, the method further comprising:

using, for a part of the route to be calculated that is:

outside of an inner ring around a cell of a sub-graph of a first level in which the start or destination point is located, and
inside of an inner ring around a cell of a sub-graph of a higher level in which the start or destination point is located

nodes and/or edges of the class associated with the sub-graph of the first the level are used to calculate the part of the route.

In some but not necessarily all examples, there is provided a method to render a graph or a road map, the method comprising:

displaying only nodes and edges which belong to selected one or more classes determined by the above method, or
displaying nodes and edges, which belong to selected one or more classes determined by the above method, in different styles, depending on the class to which they belong.

In some but not necessarily all examples, the graph is embedded in at least one of the following: a metric space, a Euclidean space, or a Spherical space of any dimension.

In some but not necessarily all examples, the graph is a road network in a geographical region.

In some but not necessarily all examples, the partitioning of the graph into cells comprises clustering the graph into clusters of nodes and edges.

In some but not necessarily all examples, the partitioning of the graph into cells is based on tiles or a grid of the digital map.

In some but not necessarily all examples, there is provided a method to determine a plurality of sub-graphs of a graph based on a plurality of partitions of the graph by the any of the above methods.

In some but not necessarily all examples, determining the minimum cost paths is based at least in part on a cost function involving a cost parameter; and optionally: wherein the cost parameter is based at least in part on one or more of the following:

traversal distance;
traversal time;
energy consumption;
scenic value; and
toll costs.

According to various, but not necessarily all, examples of the disclosure there is provided a computer-implemented method to calculate a route from a start point to a destination point, the method comprising:

using, for a part of the route to be calculated that is inside an inner ring ($\overline{R}_1$) around a cell ($R_1$) in which a start point or a destination point is located, a graph of nodes and edges; and
using, for a part of the route to be calculated that is outside the inner ring, a sub-graph of the graph, wherein the sub-graph is determined by any of the above-mentioned methods.

According to another example of the present disclosure, there is provided a computer-implemented method of generating map data from a base digital map, wherein the base digital map comprises base map data representative of segments of navigable elements of a network of navigable elements in a geographical region, and wherein each segment is defined at least in part by an edge between two nodes; the method comprising:

defining a first area ($R_1$) of the base digital map;
defining a second area ($\overline{R}_1$) on the base digital map that encloses the first area;
defining a third area ($\hat{R}_1$) on the base digital map that encloses the second area;
determining a first set of elements ($V_{R_1}$), each element of which comprises at least one of:

an edge that crosses a boundary of the first area ($R_1$),
an end node of an edge that crosses the boundary of the first area ($R_1$) and
a node that lies on the boundary of the first area ($R_1$);

determining a second set of elements ($V_{\overline{R}_1}$), each element of which comprises at least one of:

an edge that crosses a boundary of the second area ($\overline{R}_1$)
an end node of an edge that crosses the boundary of the second area ($\overline{R}_1$), and
a node that lies on the boundary of the second area ($\overline{R}_1$);

determining a third set of elements ($V_{\hat{R}_1}$), each element of which comprises at least one of:

an edge that crosses a boundary of the third area ($\hat{R}_1$),
an end node of an edge that crosses the boundary of the third area ($\hat{R}_1$), and
a node that lies on the boundary of the third area ($\hat{R}_1$);

determining a set of minimum cost paths between at least some of the elements of the first set of elements ($V_{R_1}$) and at least some of the elements of the third set of elements ($V_{\hat{R}_1}$);
determining a set of access elements ($A_{R_1}$) for the first area, wherein the set of access elements for the first area is defined by a subset of the second set of elements whose elements are located in a minimum cost path of the set of minimum cost paths; and
generating map data based at least in part on the set of access elements for the first area ($A_{R_1}$).

In some but not necessarily all examples:

determining the first set of elements ($V_{R_1}$) comprises at least one of:

determining a first set of edges ($E_{R_1}$) comprising one or more edges that cross the boundary of the first area, and determining an end node of each edge of the first set of edges;

determining the second set of elements ($V\text{-}_{R1}$) comprises at least one of:

determining a second set of edges ($E\text{-}_{R1}$) comprising one or more edges that cross the boundary of the second area, and
determining an end node of each edge of the second set of edges; and determining the third set of elements ($V^\wedge_{R1}$) comprises at least one of:

determining a third set of edges ($E^\wedge_{R1}$) comprising one or more edges that cross the boundary of the third area, and
determining an end node of each edge of the second set of edges.

In some but not necessarily all examples, determining the set of access elements for the first area, comprises at least one of:

determining a subset of the second set of edges ($E\text{-}_{R1}$), wherein each edge of the subset of edges is located in a minimum cost path of the set of minimum cost paths, and defining each edge of the subset of the second set of edges as an access element for the first area; and
determining an end node of each edge of the subset of the second set of edges, and defining each end node of each edge of the subset of the second set of edges as an access element for the first area.

In some but not necessarily all examples, the first area comprises or consists of at least one of the following:

a tile of the base digital map,
a grid of the base digital map,
a tile or grid of the base digital map at one of a plurality of levels of detail, and
a tile or grid of the base digital map at one of a plurality of dimensions; and wherein the second and/or third area comprises or consists of at least one of the following:

a closed loop on the base digital map,
a group of tiles of the base digital map,
a group of grids of the base digital map,
a group of tiles or grids of the base digital map at one of a plurality of levels of detail, and
a group of tiles or grids of the base digital map at one of a plurality of dimensions.

In some but not necessarily all examples, the method further comprises:

defining a further first area of the base digital map ($R_2$); and
determining a set of access elements for the further first area ($A_{R2}$).

In some but not necessarily all examples, the method further comprises:

partitioning the base digital map into a plurality of the first areas, and
determining a set of access elements for each of the plurality of first areas; and

optionally:

combining the set of access elements for each of the plurality of first areas into a set of access elements for the geographical region of the base digital map, and
wherein the generated map data is further based at least in part on the set of access elements for the geographical region.

In some but not necessarily all examples, the method further comprises:

partitioning the base digital map into a first plurality of first areas each having a first dimension;
determining a first set of access elements for each of the first plurality of first areas;

combining the first set of access elements for each of the first plurality of first areas into a first set of access elements for the geographical region of the base digital map;
wherein the generated map data is further based at least in part on the first set of access elements for the geographical region;
partitioning the base digital map into a second plurality of first areas each having a second dimension different to the first dimension;
determining a second set of access elements for each of the second plurality of first areas;
combining the second set of access elements for each of the second plurality of first areas into a second set of access elements for the geographical region of the base digital map;
wherein the generated map data is further based at least in part on the second set of access elements for the geographical region.

In some but not necessarily all examples, the method further comprises:

determining a set of edges between access elements, and
wherein the generated map data is further based at least in part the set of edges; and

optionally:
wherein determining a set of edges between access elements comprises determining minimum cost paths between the elements of the set of access elements.

In some but not necessarily all examples, the method further comprises generating a first layer of a digital map based at a least in part on the access elements; and wherein the generated map data comprises the first layer of the digital map.

In some but not necessarily all examples, the method further comprises:

defining a fourth area of the layer of the digital map;
defining a fifth area of the layer of the digital map that encloses the fourth area;
defining a sixth area of the layer of the digital map that encloses the fifth area;
determining a fourth set of elements, each element of which is which is either:

an edge that crosses a boundary of the fourth area,
an end node of an edge that crosses the boundary of the fourth area, and/or
a node that lies on the boundary of the fourth area;

determining a fifth set of elements, each element of which is either:

an edge that crosses a boundary of the fifth area,
an end node of an edge that crosses the boundary of the fifth area, and/or
a node that lies on the boundary of the fifth area;

determining a sixth set of elements, each element of which is either:

an edge that crosses a boundary of the sixth area,
an end node of an edge that crosses the boundary of the sixth area, and/or
a node that lies on the boundary of the sixth area;

determining a set of minimum cost paths between at least some of the elements of the fourth set of elements and at least some of the elements of the sixth set of elements;
determining a set of access elements for the fourth area, wherein the set of access elements for the fourth area is defined by a subset of the fifth set of elements whose elements are located in a minimum cost path of the set of minimum cost paths; generating a second layer of the digital map based at a least in part on the access elements for the fourth area; and
wherein the generated map data comprises the second layer.

According to another example of the present disclosure, there is provided a computer-implemented method of generating map data from a base digital map, wherein the base digital map comprises base map data representative of segments of navigable elements of a network of navigable elements in a geographical region, and wherein each segment is defined at least in part by an edge between two nodes; the method comprising:

defining a first line on the base digital map (L);
defining a second line (M) on the base digital map that is to one side of the first line and parallel to the first line;
defining a third line (N) on the base digital map that is to the other side of the first line and parallel to the first line (the lines L, M and N can be considered to form a triple of lines);
determining a first set of elements ($V_L$), each element of which comprises at least one of:

an edge that crosses the first line,
an end node of an edge that crosses the first line, and
a node that lies on the first line;

determining a second set of elements ($V_M$), each element of which comprises at least one of:

an edge that crosses the second line,
an end node of an edge that crosses the second line, and
a node that lies on the second line;

determining a third set of elements ($V_N$), each element of which comprises at least one of:

an edge that crosses the third line,
an end node of an edge that crosses the third line, and
a node that lies on the third line;

determining a set of minimum cost paths from each element of the second set of elements to each element of the third set of elements;
determining a set of access elements, wherein the set of access elements is defined by a subset of the first set of elements whose elements are located in a minimum cost path of the set of minimum cost paths; and
generating map data based at least in part on the access elements.

In some but not necessarily all examples, determining the minimum cost paths is based at least in part on a cost function involving a cost parameter; and optionally:
wherein the cost parameter is based at least in part on one or more of the following:

traversal distance;
traversal time;
energy consumption;
scenic value; and
toll costs.

In some but not necessarily all examples, the method further comprises at least one of:

determining a route based at least in part on the generated map data; and
rendering a map of at least part of the geographical region based at least in part in the generated map data.

According to another example of the present disclosure, there is provided a method of calculating a route using, at least in part, the map data generated by any one or more of the previous methods.
In some but not necessarily all examples, the route is between a start element and a destination element, wherein the start or destination element is within the first area, wherein the base digital map is used for calculating a part of the route inside the second area, and wherein the generated map data is used for calculating a part of the route outside of the second area.
In some but not necessarily all examples, the route is between a start element and a destination element, wherein the start or destination element is within the first area, wherein the base digital map is used for calculating a part of the route inside the second area, wherein the first layer of the digital map is used for calculating at least a first part of the route outside of the second area, and wherein the second layer of the digital map is used for calculating at least a second part of the route outside of the second area.
According to various, but not necessarily all, examples of the disclosure there is provided a chipset comprising processing circuitry configured to perform the above-mentioned methods.
According to various, but not necessarily all, examples of the disclosure there is provided a module, circuitry, device and/or system comprising means for performing the above-mentioned methods.

According to various, but not necessarily all, examples of the disclosure there is provided a computer program comprising instructions, which when executed by an apparatus, cause the apparatus to perform the above-mentioned method.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION OF THE DRAWINGS

Some examples will now be described with reference to the accompanying drawings in which:

Fig. 1 shows an example of a base digital map for use with examples of the present disclosure;
Fig. 2 shows an example of the base digital map of Figure 1 with gridlines/outlines of map tiles;
Fig. 3 schematically shows an example of a method according to the present disclosure;
Fig. 4 schematically shows an example of the subject matter described herein;
Fig. 5 schematically shows another of the subject matter described herein;
Fig. 6 schematically shows a further example of the subject matter described herein;
Fig. 7 schematically shows a yet further example of the subject matter described herein;
Fig. 8 schematically shows a yet further example of the subject matter described herein;
Fig. 9 schematically shows a yet further example of a method according to the present disclosure;
Fig. 10 schematically shows an example of an apparatus according to the present disclosure;
Fig. 11 schematically shows an example of a computer program according to the present disclosure;
Fig. 12 shows an example of pseudocode for use with examples of the present disclosure;
Fig. 13 shows another example of pseudocode for use with examples of the present disclosure; and
Fig. 14 shows a yet further example of pseudocode for use with examples of the present disclosure.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the drawings (and description) a similar feature may be referenced by the same three-digit number. In the drawings (and description), an optional subscript to the three-digit number can be used to differentiate different instances of similar features. Therefore, a three-digit number without a subscript can be used as a generic reference and the three-digit number with a subscript can be used as a specific reference. A subscript can comprise a single digit that labels different instances. A subscript can comprise two digits including a first digit that labels a group of instances and a second digit that labels different instances in the group.

DETAILED DESCRIPTION

The computation of optimal routes (i.e. having a lowest "cost" such as lowest: distance, time, fuel consumption, or some other cost metric) in road networks is important for navigation devices as well as for web services and other applications. Generally, such as in typical commercial applications, routes in road networks are calculated using heuristic approaches. However, such approaches may not be able always to provide optimal routes (i.e. having a least cost).

As an alternative to heuristic approaches, a route could be computed via one of several exact methods. However, such methods are typically too computationally complex and hence too slow for commercial applications.

Commercial applications often use a hierarchy of different levels of road networks. A complete road network (i.e. map data for all roads, including minor/less important roads) is only used near a start and near a destination of a planned journey. Far from the start and destination, only a sparse network of important roads are used in the route calculation. Using just a sparse network of important roads, rather than the complete road network, may enable faster route calculation for the portion of the route far from the start and far from destination. However, for such previous methods of route calculation, a resultant calculated route may not actually be the actual most optimal route between the start and end.

Various examples of the present disclosure seek to address such issues. Various examples of the present disclosure seek to enable the generation of map data that may enable the calculation of a route that is the actual most optimal route, and enabling such a route to be calculated in a fast computation time.

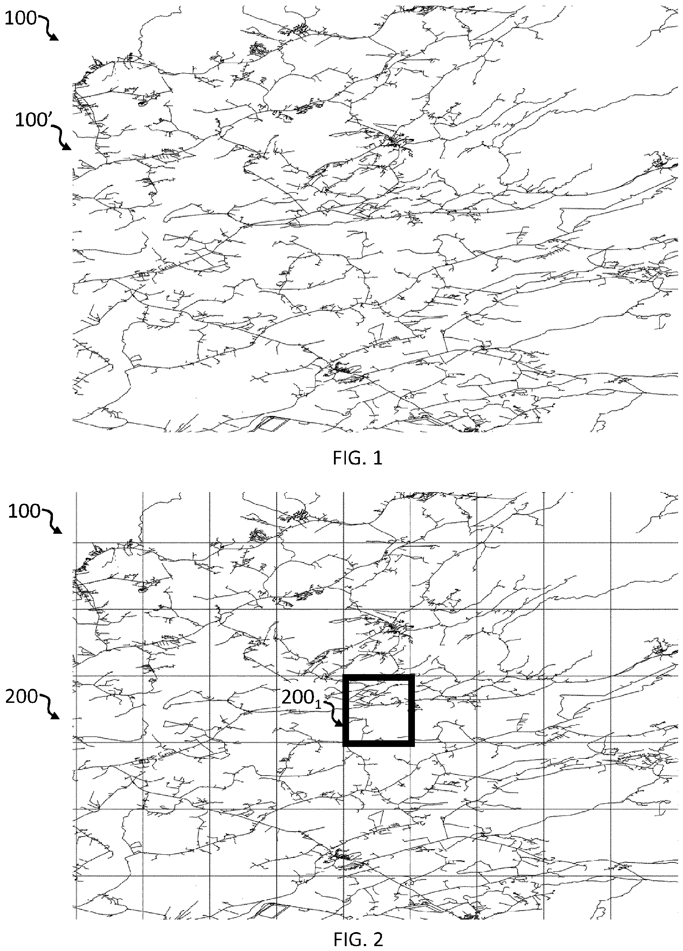

Figure 1 illustrates an example of a portion 100' of a digital map 100. The digital map comprises map data representative of segments of navigable elements of a network of navigable elements in a geographical region. In the digital map, each segment is defined at least in part by an edge between two nodes.

In the example of Figure 1, the segments of navigable elements are road segments, and the network is a road network. However, it is to be appreciated that in other examples, the navigable element segments could be segments of a: foot path, hiking trail, cycle path, canal, tow path, river, railway line, or the like.

Figure 2 illustrates the digital map of Figure 1 partitioned into a plurality of areas 200, including not least a first area $200_1$ (whose outline is highlighted merely for clarification/illustration). Such areas into which the digital map is partitioned into may be referred to as tiles, map tiles or grids.

The digital map 100 may serve as a base digital map for use in examples of the present disclosure. In this regard, the digital map may serve as an initial source of map data, i.e. base map data, from which new map data can be generated in accordance with the following described method. The (initial/source) digital map thereby be a base digital map that comprises base map data representative of segments of roads of a road network in a geographical region.

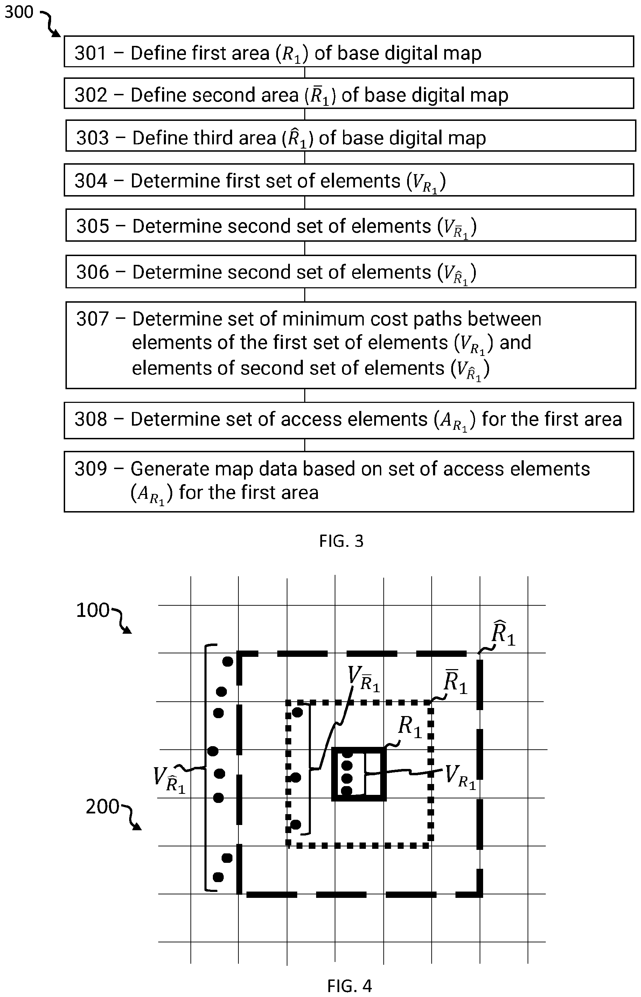

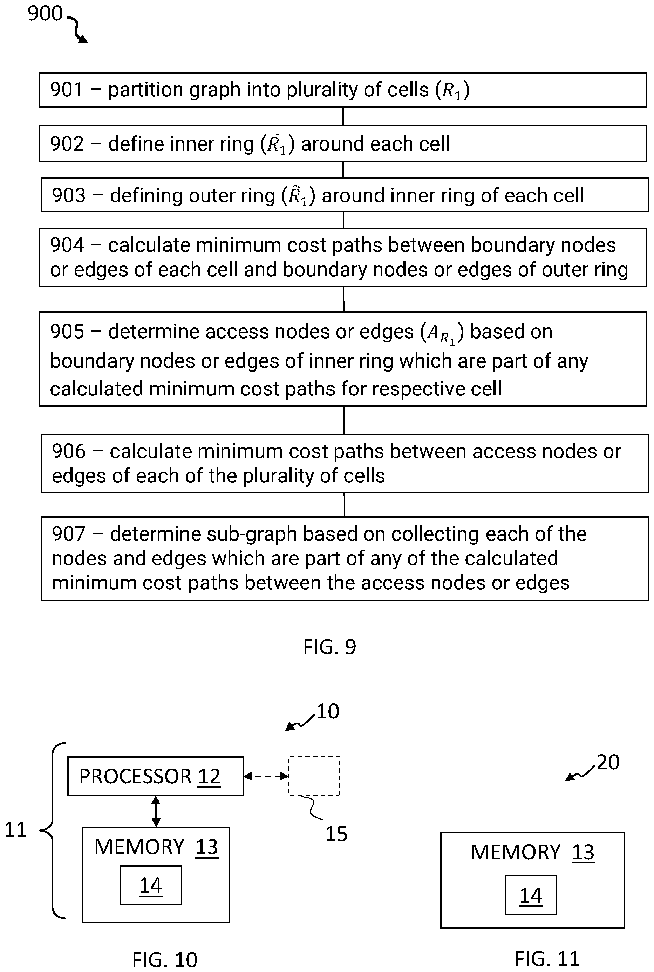

Figure 3 schematically illustrates a method 300 (which may be computer-implemented) of generating map data. The component blocks of Figure 3 are functional and the functions described can be performed by a single physical entity (such as is described with reference to Figure 10). The functions described can also be implemented by a computer program (such as is described with reference to Figure 11).

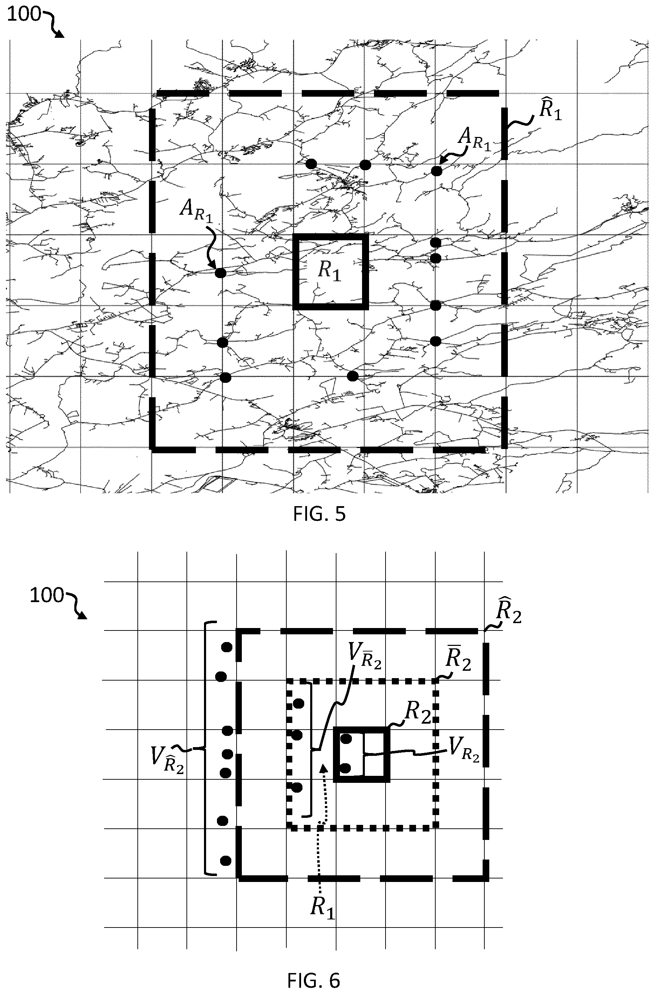

The method of Figure 3 will be described with reference to Figures 4 and 5.

Figure 4 can be considered to correspond broadly to a simplified and schematic version of an example of a partitioned base map similar to that of Figure 2. However, for the purposes of clarity, the actual road segments of the base map are not shown in Figure 4. In the regard, Figure 2's 1st area $200_1$ of map 100 corresponds to Figure 4's 1st area $R_1$ of base map 100.

The first area may comprise or consist of at least one of the following:

a tile of the base digital map;
a grid of the base digital map;
a tile or grid of the base digital map at one of a plurality of levels of detail; and
a tile or grid of the base digital map at one of a plurality of dimensions (i.e. sizes/widths/heights).

In block 301 of the method, a first area $R_1$ of the base digital map is defined. For the purposes of clarification/illustration, the first area $R_1$ is shown via a box with solid lines.

In block 302, a second area $\overline{R}_1$, that encloses the first area $R_1$, is defined on the base digital map. For the purposes of clarification/illustration, the second area $\overline{R}_1$ is shown via a box with dotted lines.

In block 303, a third area $\hat{R}_1$, that encloses the second area $\overline{R}_1$, is defined on the base digital map. For the purposes of clarification/illustration, the third area $\hat{R}_1$, is shown via a box with broken lines.

In some examples, the second and/or third area comprises or consists of at least one of the following:

a closed loop on the base digital map;
a group of tiles of the base digital map;
a group of grids of the base digital map;
a group of tiles or grids of the base digital map at one of a plurality of levels of detail; and
a group of tiles or grids of the base digital map at one of a plurality of dimensions.

As previously mentioned, the base digital map 100 comprises base map data representative of road segments, and wherein each road segment is defined in the base map data by an edge between two nodes.

In block 304, a first set of elements $V_{R_1}$ is determined, wherein each element is either:

an edge that crosses a boundary of the first area $R_1$,
an end node of an edge that crosses the boundary of the first area $R_1$,
a node that lies on the boundary of the first area $R_1$ and/or.
a point on an edge that crosses a boundary of the first area $R_1$.

In some examples, determining the first set of elements comprises determining a first set of edges $E_{R_1}$, wherein the first set of edges comprises/consists of one or more edges that cross the boundary of the first area. In some examples, determining the first set of elements further comprises determining an end node of each edge of the first set of edges.

In some examples, determining the first set of elements comprises determining a node that lies on the boundary of the first area $R_1$. In some examples, such a set of nodes may be formed by splitting, at the boundary of the first area $R_1$, each edge that crosses the boundary of the first area $R_1$. Such a splitting of edges at the boundary of the first area thereby forms nodes at the boundary of the first area.

With regards to Figure 4, the first set of elements $V_{R_1}$ are the end nodes (shown as black dots) of edges (i.e. road segments - not shown) that cross the boundary of the first area $R_1$. For the sake of simplicity/clarity, only the nodes $V_{R_1}$ for edges that cross the left-hand boundary of the first area $R_1$ are shown. It is to be appreciated similar sets of nodes would be determined (for road segments that cross the upper, right-hand and lower boundaries of the first area).

In block 305 (in a manner analogous to that of block 304 but in respect of the second area $\overline{R}_1$), second set of elements $V_{\overline{R}_1}$ is determined, wherein each element is either:

an edge that crosses a boundary of the second area $\overline{R}_1$,
an end node of an edge that crosses the boundary of the second area $\overline{R}_1$,
a node that lies on the boundary of the second area $\overline{R}_1$, and/or
a point on an edge that crosses a boundary of the second area $\overline{R}_1$.

In some examples, determining the second set of elements comprises determining a second set of edges $E_{\overline{R}_1}$, wherein the second set of edges comprises/consists of one or more edges that cross the boundary of the second area. In some examples, determining the second set of elements comprises determining an end node of each edge of the second set of edges.

In some examples, determining the second set of elements comprises determining a set of nodes that lie on the boundary of the second area $\overline{R}_1$. In some examples, determining a set of nodes that lie on the boundary of the second area $\overline{R}_1$ comprises splitting, at the boundary of the second area $\overline{R}_1$, each edge that crosses the boundary of the second area $\overline{R}_1$. Such a splitting of edges at the boundary of the second area thereby forms nodes at the boundary of the second area.

Again, for the sake of simplicity/clarity, in Figure 4, only the nodes $V_{\overline{R}_1}$ for edges that cross the left-hand boundary of the second area $\overline{R}_1$ are shown. It is to be appreciated similar sets of nodes would be determined (for road segments that cross the upper, right-hand and lower boundaries of the second area).

In block 306 (again in a manner analogous to that of blocks 304 and 305 but in respect of the third area $\hat{R}_1$, a third set of elements $V_{\hat{R}_1}$ is determined, wherein each element is either:

an edge that crosses a boundary of the third area $\hat{R}_1$,
an end node of an edge that crosses the boundary of the third area $\hat{R}_1$,
a node that lies on the boundary of the third area $\hat{R}_1$, and/or
a point on an edge that crosses a boundary of the third area $\hat{R}_1$.

In some examples, determining the third set of elements comprises determining a third set of edges $E_{\hat{R}_1}$, wherein the third set of edges comprises/consists of one or more edges that cross the boundary of the third area. In some examples, determining the third set of elements comprises determining an end node of each edge of the third set of edges.

In some examples, determining the third set of elements comprises determining a set of nodes that lie on the boundary of the third area $\hat{R}_1$. In some examples, determining a set of nodes that lie on the boundary of the third area comprises splitting, at the boundary of the third area, each edge that crosses the boundary of the third area. Such a splitting of edges at the boundary of the third area thereby forms nodes at the boundary of the third area.

Again, for the sake of simplicity/clarity, in Figure 4, only the nodes $V_{\hat{R}_1}$ for edges that cross the left-hand boundary of the third area $\hat{R}_1$ are shown. It is to be appreciated similar sets of nodes would be determined (for road segments that cross the upper, right-hand and lower boundaries of the third area).

In block 307, a set of minimum cost paths between the elements of the first set of elements $V_{R_1}$ and the elements of the third set of elements $V_{\hat{R}_1}$ is determined.

The minimum cost paths may be based at least in part on a cost function involving a cost parameter, i.e. a cost parameter associated with traversing an edge/traversing from one end node to the other. The cost parameter may be based at least in part on one or more of the following:

traversal distance;
traversal time;
energy consumption;
scenic value (i.e. wherein edges are attributed a scenic parameter value indicative of the scenery surrounding the edge/road segment, e.g. whether it is urban, rural, mountainous, coastal, forested); and
toll costs.

In some examples, determining a set of minimum cost paths comprises determining a set of minimum cost paths from each element of the first set of elements $V_{R_1}$ to each element of the third set of elements $V_{\hat{R}_1}$.

In block 308, a set of access elements $A_{R_1}$ for the first area are determined, wherein the set of access elements $A_{R_1}$ for the first area is defined by a subset of the second set of elements $V_{\overline{R}_1}$ whose elements are located in a minimum cost path of the set of minimum cost paths that were determined in step 307.

Further implementational details concerning determining the set of access nodes are discussed below under the headings "An Advanced Approach", "Definition of the Access Nodes" and "Computation of the Access Nodes".

In some examples, determining a set of access elements for the first area, comprises:

determining a subset of the second set of edges $E_{\overline{R}1}$, wherein each edge of the subset of edges is located in a minimum cost path of the set of minimum cost paths, and

defining each edge of the subset of the second set of edges $E_{\overline{R}1}$ as an access element for the first area.

In some examples, determining a set of access elements for the first area, comprises:

determining an end node of each edge of the subset of the second set of edges $E_{\overline{R}1}$, and

defining each end node of each edge of the subset of the second set of edges $E_{\overline{R}1}$ as an access element for the first area.

Figure 5 illustrates the set of access elements (in this case access nodes) $A_{R_1}$ for the first area $A_{R_1}$. In essence, the set of access nodes can be considered as a refined/optimal set of nodes for accessing the first area, a node that one would pass via when traversing, along an optimal route/minimum cost path, from a boundary of the third area to a boundary of the first area.

In block 309, map data is generated based at least in part on the set of access elements for the first area $A_{R_1}$.

In some examples a set of edges between each of the access elements of the set of access elements may be determined. The determination of the set of edges between access elements may comprise determining minimum cost paths between the elements of the set of access elements. The generated map data may be further based at least in part the set of edges.

Further implementational details concerning determining the set of edges between access elements are discussed below under the heading "The Shortest Path Query".

A first layer of a digital map may be generated based/formed based at a least in part on the access elements (and determined edges therebetween).

The flowchart of Figure 3 represents one possible scenario among others. The order of the blocks shown is not absolutely required, so in principle, the various blocks can be performed out of order. For instance, rather than: firstly defining a first area, then defining a second area enclosing the first area, and then defining a third area enclosing the second area; instead one could firstly define a third area, then define a second area enclosed by the third area, and then define a first area enclosed by the second area.

In certain examples one or more blocks can be performed in a different order or overlapping in time, in series or in parallel.

With reference to Figure 6, in some examples, the method further comprises defining a further first area of the base digital map $R_2$, and determining a set of access elements $A_{R_2}$ for the further first area $R_2$. The process for determining the set of access elements $A_{R_2}$ for the further first area $R_2$, is similar to that for determining the set of access elements for the first area $A_{R_1}$, albeit based on a differing starting area - the further first area $R_2$ corresponds to the tile to the right the first area $R_1$ of Figure 4.

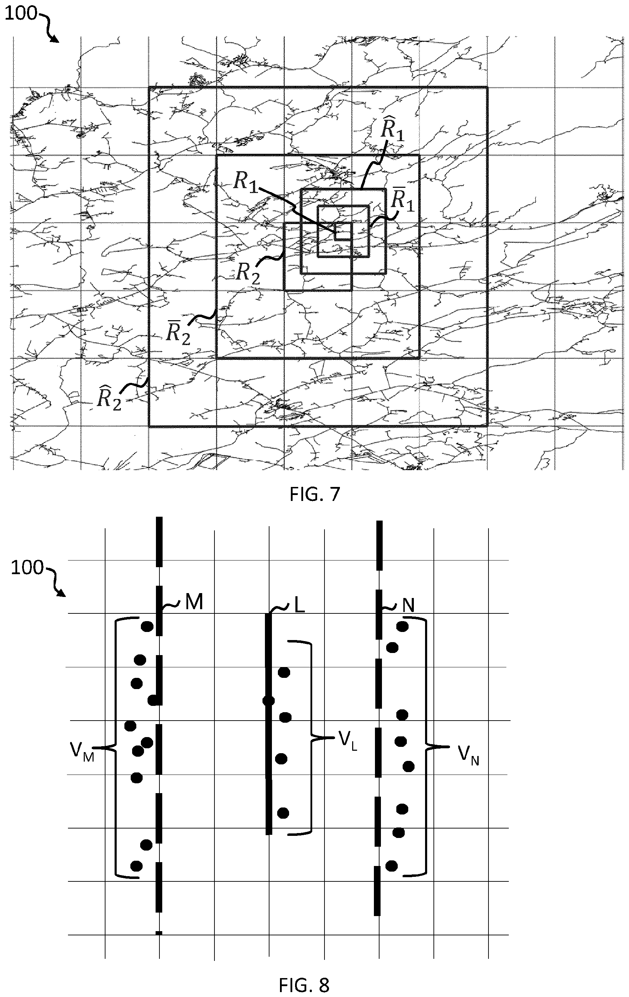

Figure 7 shows an example of the base digital map 100, along with a first set of areas, namely:

the first area $R_1$,

the second area $\overline{R}_1$, and

the third area $\hat{R}_1$.

for use in determining a set of access elements $A_{R1}$ for the first area $R_1$.

Figure 7 also shows a second set of areas, namely:

a further first area $R_2$ (i.e. a fourth area),

a further second area $\overline{R}_2$ (i.e. a fifth area), and

a further third area $\hat{R}_2$ (i.e. a sixth area)

for use in determining a set of access elements $A_{R_2}$ for the further first area (i.e. the fourth area) $R_2$.

The first set of areas ($R_1$, $\overline{R}_1$ and $\hat{R}_1$) is based on a different tile / grid size to that of the second set of areas ($R_2$, $\overline{R}_2$ and $\hat{R}_2$). In the example illustrated, the second set of areas ($R_2$, $\overline{R}_2$ and $\hat{R}_2$) are based on larger tiles / courser grid than the smaller tiles / finer grid of the first set of areas ($R_1$, $\overline{R}_1$ and $\hat{R}_1$).

Typically, the finest grid is calculated first, as then are less computations necessary for the coarser grid. However, in principle, the coarser grid could be calculated first.

It is to be appreciated that the tile / grid size for the first and further first areas can be selected as desired, for example so as to provide a desired degree of granularity. Likewise, the tile / grid size for the second and further second areas can be selected as desired, as can the tile / grid size for the third and further third areas, so as to provide a desired degree of granularity.

In order to determine a set of access elements $A_{R_2}$ for the fourth area/further first area $R_2$, the following steps may be performed:

> determining a fourth area of the layer of the digital map;
> determining a fifth area of the layer of the digital map that encloses the fourth area;
> determining a sixth area of the layer of the digital map that encloses the fifth area;
> determine a fourth set of elements, each element of which is either:
>
>> an edge that crosses a boundary of the fourth area,
>> an end node of an edge that crosses the boundary of the fourth area, and/or
>> a node that lies on the boundary of the fourth area;
>
> determining a fifth set of elements, each element of which is either:
>
>> an edge that crosses a boundary of the fifth area,
>> an end node of an edge that crosses the boundary of the fifth area, and/or
>> a node that lies on the boundary of the fifth area;
>
> determining a sixth set of elements, each element of which is either:
>
>> an edge that crosses a boundary of the sixth area,
>> an end node of an edge that crosses the boundary of the sixth area, and/or
>> a node that lies on the boundary of the sixth area;
>
> determining a set of minimum cost paths between at least some of the elements of the fourth set of elements and at least some of the elements of the sixth set of elements;
> determining a set of access elements for the fourth area, wherein the set of access elements for the fourth area is defined by a subset of the fifth set of elements whose elements are located in a minimum cost path of the set of minimum cost paths;
> generating a second layer of the digital map based at a least in part on the access elements for the fourth area; and wherein the generated map data comprises the second layer.

In some examples, a route may be calculated using, at least in part, the differing layers of the digital map. In this regard, the route may be between a start element and a destination element, wherein the start (or destination) element is within the first area, wherein the base digital map is used for calculating a part of the route inside the second area. Whereas, the first layer of the digital map is used for calculating a first part of the route outside of the second area. The second layer of the digital map can be used for calculating at least a second part of the route outside of the second area.

In some examples, the base digital map is partitioned into a plurality of the first areas, and a set of access elements is determined for each of the plurality of first areas.

The set of access elements for each of the plurality of first areas may then be combined into a set of access elements for the geographical region of the base digital map. The generated map data (i.e. of step 309) may further be based at least in part on the set of access elements for the geographical region.

The generated map data may be used to determine a route, i.e. from:

> an access element of an area containing a start point,
> to an access element of an area containing a destination point

via access elements of the set of access elements.

In some examples, there is provided a method of calculating a route using, at least in part, the generated map data. In this regard, the route is between a start point and a destination point, wherein the start (or destination) point is within the first area. The base digital map is used only for calculating the part of the route inside the second area (which encloses the first area and contains the start (or destination)). Whereas, the generated map data is used for calculating the part of the route outside of the second area.

Advantageously, instead of performing routing using the base digital map and its vast amount of nodes and edges, in effect, a reduced data set of nodes and edges may be used for the source data for the routing algorithm, namely the generated map data comprising the set of access nodes and determined edges therebetween.

This may enable faster and more efficient routing calculations to be performed. Moreover, since the edges between the access nodes have already been predetermined/pre-defined as being lowest cost paths using the base digital map data, a resultant lowest cost route between the access nodes via the determined edges of the access nodes would likewise be a lowest cost route through the base digital map. Hence, a lowest cost route through the base digital map can be calculated using the generated map data without needing to apply the routing algorithm directly on the base digital map, which means faster and more efficient routing calculations can be performed.

The generated map data may also be rendered, e.g. via a display of a navigation device. The navigation device may take any suitable form. It may be a mobile or portable navigation device. It may be an integrated navigation device built into a vehicle or a hand-portable navigation device, such as a dedicated navigation device or a duly configured smart phone.

The set of access elements may be used to form map data at a first hierarchal level.

A first layer of a digital map may be generated based at a least in part on the access elements. In this regard, the first layer of the digital map may be formed, at least in part on the access elements, and also the determined edges (minimum cost paths) therebetween.

A further set of access elements may be determined at a second, differing hierarchal level.

In this regard, the base digital map may be partitioned into a first plurality of first areas, each having a first dimension (i.e. a map tile of a first size/width/height).

A first set of access elements may be determined for each of the first plurality of first areas. The first set of access elements for each of the first plurality of first areas may be combined into a first set of access elements for the geographical region of the base digital map.

The generated map data may be further based at least in part on the first set of access elements for the geographical region.

The base digital map may then be partitioned into a second plurality of first areas each having a second dimension different to the first dimension. A second set of access elements for each of the second plurality of first areas may be determined. The second set of access elements for each of the second plurality of first areas may be combined into a second set of access elements for the geographical region of the base digital map. The generated map data may then be further based at least in part on the second set of access elements for the geographical region.

The determination of:

a set of access elements, and respective set of edges for the same, at a first hierarchical level,
a plurality of sets of access elements, and respective plurality of set of edges for the same, at a plurality of hierarchical levels,

and generating map data based on/formed of the same (for route calculation and rendering on a display), has been described with respect to the above-mentioned method, as shown with respect to Figures 1 to 5, which is based on partitioning a base map into first areas, and determining access elements for each area, and generating map data comprising all the access elements and their respective edges.

However, other methods of determining access elements may be used. For instance, instead of the 'area-based' method described above, a 'line-based' method (also referred to as sweep line approach - which uses a triple of lines) could be carried out.

Such an alternative method of determining access elements, and generating map data based on the same, is as follows and is illustrated with respect to Figure 8.

For the purposes of clarity, the actual road segments of the base map are not shown in Figure 8. Also, whilst the grid lines are shown in Figure 8, they are note essential to the method.

The 'line-based' method comprises:

defining a first line L, of a pre-determined length, on the base digital map 100;
defining a second line M, of a pre-determined length greater than the length of L, on the base digital map that is to one side of the first line and parallel to the first line;
defining a third line N, of a pre-determined length greater than the length of L, on the base digital map that is to the other side of the first line and parallel to the first line (the three lines L, N and M form a triple of lines);
determining a first set of elements $V_L$, each element of which comprises at least one of:

an edge that crosses the first line,
an end node of an edge that crosses the first line, and

a node that lies on the first line;

determining a second set of elements $V_M$, each element of which comprises at least one of:

an edge that crosses the second line,
an end node of an edge that crosses the second line, and
a node that lies on the second line;

determining a third set of elements $V_N$, each element of which comprises at least one of:

an edge that crosses the third line,
an end node of an edge that crosses the third line, and
a node that lies on the third line;

determining a set of minimum cost paths from each element of the second set of elements $V_M$ to each element of the third set of elements $V_N$;
determining a set of access elements $A_L$, wherein the set of access elements is defined by a subset of the first set of elements $V_L$ whose elements are located in a minimum cost path of the set of minimum cost paths; and generating map data based at least in part on the access elements.

In figure 8, first, second and third set of elements $V_L$, $V_M$ and $V_N$ are shown as being end nodes of an edge that respectively crosses the first, second and third lines L, M and N.

Having determined a set of access nodes for a line L of the base digital map, the process is repeated for other lines of the base map. In this regard, a set of lines are defined for the base digital map (for instance each line may correspond to line of a predetermined length separated from the other lines by a first predetermined width), and access nodes for each line of the set of lines are determined so as to generate access nodes for the entire base map - such access nodes forming map data for a digital map.

This process can be done with lines of a first predetermined length, separated from each other by a first pre-determined width, to form map data at a first hierarchal level. The whole process can then be repeated with lines of a second predetermined length, separated from each other by a second pre-determined width, to form map data at a second hierarchal level.

In such a manner, map data of various differing hierarchal levels can be generated, wherein each level's map data comprises access nodes and determined edges therebetween.

Further implementational details concerning the line-based/sweep line approach to determining access nodes are discussed below under the heading "The Sweep Line Algorithm".

Figure 9 schematically illustrates a method 900 which is similar to the method of Figure 3, albeit the method 900 is for determining a sub-graph of a graph (representative of a digital map of segments of navigable elements of a network of navigable elements in a geographical region) consisting of nodes and edges.

The component blocks of Figure 9 are functional and the functions described can be performed by a single physical entity (such as is described with reference to Figure 10). The functions described can also be implemented by a computer program (such as is described with reference to Figure 11).

The method of Figure 9 will be described with reference to Figures 4 and 5.

In block 901, a graph, that is representative of a digital map (100) of segments of navigable elements of a network of navigable elements in a geographical region, is partitioned into a plurality of cells ($R_1$) comprising nodes and edges.

Such partitioning of the graph into cells may comprise clustering the graph into clusters of nodes and edges. The partitioning of the graph into cells may be based on, or correspond to, tiles or a grid of a digital map (100).

The graph may be a road network in a geographical region. The graph may be embedded in: a metric space, a Euclidean space, or a Spherical space. The graph may be embedded in any such space in any dimension (e.g. a 2D or 3D space).

In block 902, an inner ring ($\overline{R}_1$), comprising nodes and edges, is defined around each cell.

In block 903, an outer ring ($\hat{R}_1$), comprising nodes and edges, is defined around the inner ring of each cell.

In block 904, a calculation is made, for each cell, of minimum cost paths between:

boundary nodes or edges of each cell and
boundary nodes or edges of the outer ring of the respective cell.

In block 905, access nodes or edges ($A_{R_1}$) are determined for each cell based on boundary nodes or edges of the inner ring for the respective cell which are part of any of the minimum cost paths for the respective cell calculated in block 904.

In block 906, minimum cost paths between the access nodes or edges of each of the plurality of cells are calculated.

In block 907, a sub-graph is determined based at least in part on collecting each of the nodes and edges which are part of any of the minimum cost paths calculated (in block 906) between the access nodes or edges.

The subgraph determined from the method 900 of FIG. 9 can be used in a method to calculate a route from a start point to a destination point. Such a routing method comprises:

using, for a part of the route to be calculated that is inside an inner ring ($\overline{R}_1$) around a cell ($R_1$) in which a start point or a destination point is located, a graph of nodes and edges (i.e. the complete graph); and

using, for a part of the route to be calculated that is outside the inner ring, a sub-graph of the graph, wherein the sub-graph is determined by the above-described method 900.

There now will be described an alternative method to determine a sub-graph of a graph (the graph consisting of nodes and edges, wherein the graph is representative of a digital map of segments of navigable elements of a network of navigable elements in a geographical region). In this regard, instead of Fig. 9's 'ring-based' method described above, a 'line-based' method (also referred to as sweep line approach) could be carried out - in a similar manner to that described with respect to FIG. 8.

The alternative method of determining the sub-graph of the graph comprises:

defining a plurality of triples of lines, wherein for each of the triples of lines a second line is between a first line and a third line;

calculating, for each triple of lines, minimum cost paths between nodes or edges intersecting the first line and nodes or edges intersecting the third line;

determining access nodes or edges for each triple of lines based on nodes or edges intersecting the second line of the triple which are part of any of the calculated minimum cost paths between the first and third line of the triple;

calculating minimum cost paths between the access nodes or edges of each of the plurality of triples of lines; and

determining the sub-graph based at least in part on collecting each of the nodes and edges which are part of any of the calculated minimum cost paths between the access nodes or edges.

The minimum cost paths may be determined based at least in part on a cost function involving a cost parameter. The cost parameter may be based at least in part on one or more of the following:

traversal distance;

traversal time;

energy consumption;

scenic value; and

toll costs.

Each triple of lines may consist of three non-intersecting lines, e.g. three parallel straight lines, and the triples of lines may be part of a pre-defined grid such as a regular grid (e.g. corresponding to tiles of a digital map).

The triples of lines partition the graph into a plurality of cells comprising nodes and edges.

For each cell, which is determined at least partially by the first line of a corresponding triple of lines, the following is defined:

an inner ring, comprising nodes and edges, around the cell and associated with the second line of the corresponding triple of lines;

an outer ring, comprising nodes and edges, around the inner ring of the cell and associated with the third line of the corresponding triple of lines.

The sub-graph determined according to the above described method may likewise be used in a method for calculating a route from a start point to a destination point.

Such a routing method may comprise:

using, for a part of the route to be calculated that is inside a first distance from the cell in which the start point is located (or inside a second distance from the cell in which the destination point is located), a graph; and

using, for a part of the route to be calculated that is outside the first distance from the cell in which the start point is located (or outside a second distance from the cell in which the destination point is located), only the sub-graph determined as per the above described method for determined a sub-graph.

The above method for determining a sub-graph can be used to determine a plurality of sub-graphs. In this regard, a plurality of sub-graphs of a graph can be determined based on a plurality of pluralities of triples of lines by the above-mentioned method.

Similarly, the method 900 of FIG. 9 for determining a sub-graph can be used to determine a plurality of sub-graphs. In this regard, a plurality of sub-graphs of a graph can be determined based on a plurality of partitions of the graph by the method 900, e.g. wherein, for each sub-graph, a different partition sized is used.

The plurality of sub-graphs can constitute a hierarchy of sub-graphs, each sub-graph having a differing level.

The hierarchy of sub-graphs can be used in method to calculate a route. In this regard, a method for calculating a route from a start point to a destination point on a graph of nodes and edges with a hierarchy of levels of sub-graphs (as determined by the above-mentioned methods) may comprise:

using, for a part of the route to be calculated that is:

outside of an inner ring around a cell, of a sub-graph of a first level, in which the start or destination point is located, and

inside of an inner ring around a cell, of a sub-graph of a higher level, in which the start or destination point is located

only a sub-graph of a first level to calculate the part of the route.

The hierarchy of sub-graphs can be used in method to render a graph (e.g. a graph representative of a road map). In this regard, a method for rendering a graph or a road map may comprise:

displaying only nodes and edges which belong to selected one or more sub-graphs; or
displaying nodes and edges, which belong to selected one or more sub-graphs, in different styles, depending on the sub-graph to which they belong.

The hierarchy of sub-graphs can be used in method to determine a classification of nodes and/or edges of a graph (e.g. a graph representative of a road map). In this regard, a method to determine a classification of nodes and/or edges of a graph, the method comprises:
determining nodes and/or edges as belonging to the same class if they are part of the same sub-graph of the plurality of sub-graphs.

Such a classification of nodes and/or edges can be used in method to calculate a route. In this regard, a method to calculate a route from a start point to a destination point on a graph of nodes and edges with a classification of nodes and/or edges (as determined by the above-described classification method) may comprise:

using, for a part of the route to be calculated that is:

outside of an inner ring around a cell of a sub-graph of a first level in which the start or destination point is located, and

inside of an inner ring around a cell of a sub-graph of a higher level in which the start or destination point is located

nodes and/or edges of the class associated with the sub-graph of the first the level to calculate the part of the route.

The classification of nodes and/or edges can also be used in method to render a graph (e.g. a graph indicative of a road map). In this regard, a method to render a graph or a road map, the method may comprise:

displaying only nodes and edges which belong to selected one or more classes determined by the above-mentioned classification method, or
displaying nodes and edges, which belong to selected one or more classes determined by the classification method, in different styles, depending on the class to which they belong.

The blocks illustrated in Figures 3 and 9, as well as the various methods, steps and functionality described above, may represent actions in a method, functionality performed by an apparatus, and/or sections of instructions/code in the computer program.

It will be understood that each block and combinations of blocks illustrated in Figure 3, as well as the further methods, steps and functions described above, can be implemented by various means, such as hardware, firmware, and/or software including one or more computer program instructions. For example, one or more of the functions described below can be performed by a duly configured apparatus (such as a server or navigation device). One or more of the functions described below can be embodied by a duly configured computer program (such as a computer program comprising computer program instructions which embody the functions described below and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

Fig. 10 schematically illustrates a block diagram of an apparatus 10 for performing the methods, processes, procedures and signalling described in the present disclosure (not least such as those illustrated in Figs. 3 and 9, as well as those illustrated with respect to figures 4 to 8; and the above-described methods), in this regard the apparatus may be, not least for example, a server or a navigation device. The component blocks of Fig. 10 are functional and the functions described can be performed by a single physical entity.

The apparatus comprises a controller 11, which could be provided within a device such as a server or a navigation device.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a general-purpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example one or more of: a radio transceiver, sensors, input/output user interface elements and/or other modules/devices/components for inputting and outputting data/commands).

The memory 13 stores instructions such as a computer program 14 comprising such instructions (e.g. computer program instructions/code) that controls the operation of the apparatus 10 when loaded into the processor 12. The instructions of the computer program 14, provide the logic and routines that enables the apparatus to perform the methods, processes and procedures described in the present disclosure (not least such as those illustrated in Figs. 3 and 9 as well as those illustrated with respect to figures 4 to 8, and the above-described methods). The processor 12, by reading the memory 13, is able to load and execute the computer program 14.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components for effecting the methods, processes and procedures described in the present disclosure (not least such as those illustrated in Figs. 3 and 9, as well as those illustrated with respect to figures 4 to 8). It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a server device, a client device, a mobile cellular telephone, an in-vehicle integrated device, a wireless communications device, a hand-portable electronic device etc. The apparatus can be embodied by a computing device, not least such as those mentioned above. However, in some examples, the apparatus can be embodied as a chip, chip set, circuitry or module, i.e. for use in any of the foregoing.

In some examples, there is provided an apparatus to determine a sub-graph of a graph consisting of nodes and edges, wherein the graph is representative of a digital map (100) of segments of navigable elements of a network of navigable elements in a geographical region, wherein the apparatus comprises:

at least one processor 12; and
at least one memory 13 storing instructions that, when executed by the at least one processor 12, cause the apparatus at least to:

define a plurality of triples of lines, wherein for each of the triples of lines a second line is between a first line and a third line;
calculate, for each triple of lines, minimum cost paths between nodes or edges intersecting the first line and nodes or edges intersecting the third line;
determine access nodes or edges for each triple of lines based on nodes or edges intersecting the second line of the triple which are part of any of the calculated minimum cost paths between the first and third line of the triple;
calculate minimum cost paths between the access nodes or edges of each of the plurality of triples of lines; and
determine the sub-graph based at least in part on collecting each of the nodes and edges which are part of any of the calculated minimum cost paths between the access nodes or edges.

Fig. 11 illustrates a computer program 14 which may be conveyed via a delivery mechanism 20. The delivery mechanism 20 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 14. The delivery mechanism can be a signal configured to reliably transfer the computer program. An apparatus can receive, propagate or transmit the computer program as a computer data signal.

In certain examples of the present disclosure, there is provided a computer program to determine a sub-graph of a graph consisting of nodes and edges, wherein the graph is representative of a digital map (100) of segments of navigable elements of a network of navigable elements in a geographical region, wherein the computer program comprises instructions, which when executed by an apparatus, cause the apparatus to perform at least the following or for causing performing at least the following:

define a plurality of triples of lines, wherein for each of the triples of lines a second line is between a first line and a third line;

calculate, for each triple of lines, minimum cost paths between nodes or edges intersecting the first line and nodes or edges intersecting the third line;

determine access nodes or edges for each triple of lines based on nodes or edges intersecting the second line of the triple which are part of any of the calculated minimum cost paths between the first and third line of the triple;

calculate minimum cost paths between the access nodes or edges of each of the plurality of triples of lines; and

determine the sub-graph based at least in part on collecting each of the nodes and edges which are part of any of the calculated minimum cost paths between the access nodes or edges.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

There now follows a treatise and discussion of a further examples of the present disclosure. In this regard, differing approaches and algorithms will be described in accordance with the present disclosure which may provide fast and exact routing via the use of access points (i.e. access elements, such as access nodes and access edges) and precomputed road networks of higher levels.

The basic idea of the various approaches and underlying algorithm discussed below is an observation that important roads are mainly used for long distance trips. Minor roads are only used near a journey's the start and destination nodes.

This same idea is used in many heuristic methods which are currently in use (wherein a hierarchy of road networks of different road classes are used). Such heuristic methods have been shown in the praxis as being very fast. However they cannot guarantee an optimal solution, i.e. an optimal/lowest cost route. The quality of the computed routes depends strongly on the underlying road classification and on the fine tuning of the algorithm. Therefore different applications may compute very different routes (based on the same source/base map).

In order to overcome such deficiencies, in the present solution, we determine our own hierarchy of road networks. Additionally well-defined access points are used to switch between hierarchical levels. Both ideas may ensure that exact solutions, i.e. the most optimal route, are obtained. Furthermore, fast calculation/query times may be preserved. As an additional benefit of the presently proposed method, one obtains a new road classification. This road classification can also be useful for other applications, like map display or for heuristic routing algorithms.

The algorithm consists of two steps: i) a pre-computation step, and ii) a proper shortest path query.

The pre-computation step itself consists of two steps (per level): a) a determination of access nodes, and b) a generation of a higher level network.

Before going into the above steps in details, the following basic definitions are provided:

Basic Definitions

A road network can be represented as a graph $G = (V, E)$ with $n$ nodes or vertices $V$ and $m$ road elements or edges $E \subseteq V \times V$.

The edges considered here are directed edges. But the algorithm could equally work with undirected graphs - one can replace an undirected edge by two directed edges.

For each road element we have a given cost function or edge weight. This cost function may depend on travel distance, travel time, toll costs, energy consumption, scenic value and others.

With $\gamma : E \to C$ we denote the edge weights. In a similar way it is possible to associate a weight with a node or a transition. Usually the codomain $C$ are non-negative real numbers $C = \mathbb{R}_+$.

A path $p$ in $G$ from a node $u_0$ to a node $u_k$ is a sequence of edges $(u_0, u_1)$, $(u_1, u_2)$, $(u_2, u_3)$, ..., $(u_{k-1}, u_k)$.

A sub-path $\tilde{p}$ of $p$ is a subsequence $(u_i, u_{i+1})$, ..., $(u_{j-1}, u_j)$, $0 \le i < j \le k$ of edges of $p$. For a sub-path $\tilde{p}$ of $p$ we write the symbol $p$ $\tilde{p} \dashv p$.

The same symbol $(u_i, u_{i+1}) \dashv p$ we use for a single edge $(u_i, u_{i+1})$, which is contained in the path $p$.

With $P(u,v)$ we denote the set of all paths from $u$ to $v$ and with $P := U_{u,v \in V} P(u, v)$ the set of all paths.

The definition of the paths allows to extend the weight function for paths $\gamma: P \to C$:

$$\gamma(p) := \sum_{i=0}^{k-1} \gamma(u_i, u_{i+1}) \qquad (1)$$

Usually one defines a shortest distance $\delta(s,t)$ between sand fas:

$$\delta(s,t) := \min_{p \in P(s,t)} \gamma(p) \qquad (2)$$

We can interpret that as further extension of the weight function $\gamma$ to $\delta: V \times V \to C$. A shortest path $\hat{p} \in P(s,t)$ between sand tis characterized by:

$$\gamma(\hat{p}) = \delta(s,t) \qquad (3)$$

It is noted that it is possible that there exists an edge $(u_1, u_2) \in E$ with $\delta(u_1, u_2) < \gamma(u_1, u_2)$ (respectively $\delta(u_1, u_2) < \gamma(u_1, u_2)$). Therefore we use different symbols for the costs of edges and paths (y) respectively of the shortest distance between two nodes ($\delta$).

General Concept

The basic idea of our approach is to use a hierarchy of graphs of different levels $G_l = (V_l, E_l)$, $l = 0, \ldots, k$. The original graph $G = (V, E)$ corresponds to level 0, so we have $V_0 := V$, $E_0 := E$ and $G_0 := G$. For higher levels only important nodes of the lower levels are selected, $V_0 \supseteq V_1 \supseteq \cdots \supseteq V_k$. The edges of higher levels represent shortest paths on lower levels.

For each node $v \in V$ we have for each level $l = 1, \ldots, k$ a well-defined set of access nodes $A_l(v) \subseteq V_l$. If all nodes $v \in \tilde{V}$ of a node set $\tilde{V} \subseteq V_l$ have the same access nodes $A_l(v)$ we will write $A_l(\tilde{V})$. With our grid-based approach each node $v$ inside a rectangular tile $R$ will have the same access nodes $A_l(v)$. In this case we write also $A_l(R)$. However, with a more general approach, it is possible to define, for each node $v \in V_l$, an individual set of access nodes $A_l(v)$.

During the shortest path query we switch the level of hierarchy only at the access nodes of the start node sand the destination node $t$. It is convenient to distinguish between ascending access nodes $\vec{A}_l(v)$ and descending access nodes $\overleftarrow{A}_l(v)$.

For undirected graphs both ascending and descending access node sets are equal, and we can use just one access node set $A_l(v) := \vec{A}_l(v) = \overleftarrow{A}_l(v)$. But also for directed graphs it is possible to use just one access node set $A_l(v) := \vec{A}_l(v) \cup \overleftarrow{A}_l(v)$. However we want to consider the more general case of different ascending and descending access node sets $\vec{A}_l(v)$ and $\overleftarrow{A}_l(v)$. If we do not want to distinguish between $\vec{A}_l(v)$, $\overleftarrow{A}_l(v)$ and $A_l(v)$, we use the symbol $\overleftrightarrow{A}_l(v)$.

The ascending access nodes $\vec{A}_l(s)$ of the start node $s$ are used to ascend the level $l$, whereas the descending access nodes $\overleftarrow{A}_l(t)$ of the destination node tare used to descend from the level $l$ to lower levels. If a bidirectional query algorithm is used, the descending access nodes $\overleftarrow{A}_l(t)$ of the destination node are used to ascend the level $l$ during the backward search.

Beside the access nodes $A_l(v)$, respectively $\vec{A}_l(v)$, $\overleftarrow{A}_l(v)$; we need, for each node $v \in V$, a criterion to terminate the search on lower levels. A simple criterion to terminate the search on level $l - 1$ is, if all nodes $a \in \overleftrightarrow{A}_l(v)$ are reached. But this criterion does not avoid unnecessary searches after descending a level.

However, we will see that we get a better criterion based on our grid-based approach. Therefore we define for each level $l = 0, \ldots, k - l$ the local surrounding $L_l(v)$ for each node $v \in V$. Then the search on level l is limited to the local surroundings $L_l(s)$, $L_l(t)$ of the start node $s$ respectively the destination node $t$.

As mentioned above we use a grid-based approach. Such methods have several advantages. Data formats for navigation devices (like NDS - the Navigation Data Standard) often stores the data in a grid-based tile schema. This allows a fast and efficient access to the data.

Based on the rectangular grid we compute the access nodes $\vec{A}_l(v)$, $\overleftarrow{A}_l(v)$. The nodes $V_{l+1}$ of the next higher level $l +$

1 are defined as:

$$V_{l+1} := \bigcup_{v \in V_l} \vec{A}_l(v) \cup \bigcup_{v \in V_l} \overleftarrow{A}_l(v) \qquad (7)$$

Two nodes $u_1, u_2 \in V_l$, $l = 1, \ldots, k$ are connected by an edge, if there exists a shortest path $p \in \hat{P}(u_1, u_2)$ which contains no other node $w \in V_l$, $w \neq u_1, u_2$.

Since the shortest distance between two nodes does not depends on the level $l$, the definition of the cost for the edge $(u_1, u_2)$ is independent from the level. Therefore we will often omit the index $l$ and write simply $\gamma$. But we should keep in mind that for level 0 the cost $\gamma(u_1, u_2)$ is in general different from $\delta(u_1, u_2)$.

Determination of the Access Nodes

A Simple Approach

Starting at level 0 we construct the access nodes $\vec{A}_l(v)$ level by level. The entirety of all access nodes $\vec{A}_l(v)$ of a certain level $l$ are the nodes $V_{l+1}$ of the next higher-level $l + 1$:

$$V_{l+1} := \bigcup_{v \in V_l} \vec{A}_l(v) \qquad (8)$$

After the construction of the nodes $V_{l+1}$ of level $l + 1$ we have to compute the edge set $E_{l+1}$.

We consider a hierarchy of grid-based tiling schemas $\Re_0, \ldots, \Re_{k-1}$ which cover the whole road network. Thereby $\Re_0$ is the finest and $\Re_{k-1}$ the coarsest grid. Let $R \in \Re_l$ be one of these rectangular tiles at level $l$. With $E_R \subseteq E_l$ we denote all edges which have one end node inside (or at the boundary of) $R$ and the other end node outside of $R$. For each edge $e \in E_R$ we select one of the end nodes by a well-defined rule; e.g. the node with the smaller id. The set of all these selected nodes from $E_R$ are denoted by $V_R$.

In a simple approach we use $V_R$ direct as access nodes for all nodes $v \in V_l$ which are inside the tile $R (A_l(R) := V_R)$.

In order to distinguish between ascending $(\vec{A}_l)$ and descending $(\overleftarrow{A}_l)$ access nodes we distinguish also two different edge sets $\vec{E}_R$ and $\overleftarrow{E}_R$. $\vec{E}_R$ contains all edges which have a start node inside (or on the boundary of) $R$ and an end node outside the tile $R$. Accordingly $\overleftarrow{E}_R$ contains all edges which have a start node outside $R$ and an end node inside or on the boundary of $R$.

Again we select for each edge $e \in \vec{E}_R$ respectively $e \in \overleftarrow{E}_R$ one of the end nodes by a well-defined rule. We get the node sets $\vec{V}_R$ and $\overleftarrow{V}_R$ which define the ascending access nodes $\vec{A}_l(R) := \vec{V}_R$ and the descending access nodes $\overleftarrow{A}_l(R) := \overleftarrow{V}_R$. The nodes $V_{l+1}$ of the next higher-level $l + 1$ are the entirety of all ascending and descending access nodes $\vec{A}_l(R)$ and $\overleftarrow{A}_l(R)$ of all tiles $R \in \Re_l$ of level $l$:

$$V_{l+1} := \bigcup_{R \in \Re_l} \vec{A}_l(R) \cup \bigcup_{R \in \Re_l} \overleftarrow{A}_l(R) \qquad (9)$$

If there are only few unidirectional road elements the ascending and descending access nodes $\vec{A}_l(R)$ and $\overleftarrow{A}_l(R)$ are nearly the same. In this case the distinction between $\vec{A}_l(R)$ and $\overleftarrow{A}_l(R)$ is not necessary and we can use for both purposes the access node set $A_l(R)$.

On the other hand, if there are many unidirectional road elements the distinction between the ascending and descending access nodes $\vec{A}_l(R)$ and $\overleftarrow{A}_l(R)$ may reduce the search space during the query.

An Advanced Approach

Definition of the Access Nodes

An issue with the above-discussed simple approach to determining access nodes is that it may also select many unimportant nodes as access nodes, simply because they cross a tile border.

The idea in this advanced approach is to choose access nodes slightly away from the centre tile $R$. This reduces the number of access nodes and therefore also the number of nodes in the next higher level significantly.

Choose access nodes slightly away from the centre tile $R$ does mean that the area for the local search increases. In order to compensate this, we can use finer grids $\mathfrak{R}_0, \ldots \mathfrak{R}_{k-1}$. The reduction of the access nodes overcompensates the increasing of the number of access nodes by using finer grids.

The access nodes are only used to compute the nodes of the next higher level. For these access nodes we compute a complete road network of the higher level. Therefore we can use more levels and finer grids than may otherwise have been feasible/possible. This allows us to apply a method of the simultaneous computation of routes for different criteria/conditions for the simple Dijkstra search.

Instead of using $V_R$ direct as access nodes (like in the simple approach), we use $V_R$ merely as means to compute the access nodes $A_l(R)$. Additionally to the rectangular tile $R$ we consider an extension $\overline{R}$ of $R$ which contains one or two additional rows (or rings) of tiles around $R$. So $\overline{R}$ may consist of $3 \times 3$ or $5 \times 5$ tiles respectively with $R$ in the centre.

Furthermore we consider a further larger area $\hat{R}$ which contains further one or two additional rows (or rings) of tiles around $\overline{R}$. So $\hat{R}$ may consists of $5 \times 5$ or $9 \times 9$ tiles respectively with R in the centre.

Analogously to $E_R$ we define the edge sets $E_{\overline{R}}$ and $E_{\hat{R}}$ which respectively cross the boundary of $\overline{R}$ and $\hat{R}$. Accordingly to $V_R$ we also define the node sets $V_{\overline{R}}$ and $V_{\hat{R}}$. Then the access nodes $A_l(v)$, for all $v$ inside $R$ are all nodes from $u \in V_{\overline{R}}$ which are on a shortest route $p \in \hat{P}(u_1, u_2) \cup \hat{P}(u_2, u_1)$ from a node $u_1 \in V_R$ to a node $u_2 \in V_{\hat{R}}$ or conversely.

In order to distinguish between ascending $(\vec{A}_l)$ and descending $(\overleftarrow{A}_l)$ access nodes we distinguish also between shortest paths $p \in \hat{P}(u_1, u_2)$ from node $u_1 \in V_R$ to a node $u_2 \in V_{\hat{R}}$ and $p \in \hat{P}(u_2, u_1)$ from a node $u_2 \in V_{\hat{R}}$ to a node $u_1 \in V_R$. If $u \in V_{\overline{R}}$ is on a shortest path $p \in \hat{P}(u_1, u_2)$ from a node $u_1 \in V_R$ to a node $u_2 \in V_{\hat{R}}$ then $u$ is an ascending access node $(u_1, u_2 u \in \vec{A}_l)$. Thereby it is sufficient to consider only $u_1 \in \vec{V}_R$ and $u_2 \in \vec{V}_{\hat{R}}$.

Conversely if $u \in V_{\overline{R}}$ is on a shortest path $p \in \hat{P}(u_2, u_1)$ from a node $u_2 \in V_{\hat{R}}$ to a node $u_1 \in V_R$ the $u$ is a descending access node $(u \in \overleftarrow{A}_l)$. Again it is sufficient to consider only $u_2 \in \overleftarrow{V}_{\hat{R}}$ and $u_1 \in \overleftarrow{V}_R$.

Computation of the Access Nodes

A simple straight forward approach is to compute all shortest paths between nodes in $V_R$ and $V_{\hat{R}}$. Then we mark all nodes in $V_{\overline{R}}$ that appear on at least one these shortest paths.

The Sweep Line Algorithm

Another method to compute the access nodes is a *sweep-line algorithm*. The idea is to start the route computation with the nodes of $V_{\overline{R}}$ instead of $V_R$. For that purpose horizontal and vertical sweep lines are used.

Consider one horizontal and vertical line of a grid after the other. For such a sweep line $L$ let be $E_L$ the set of all edges which cross the line.

Selecting one of the nodes of each edge (by the well-defined rule mentioned above) we get the node set $V_L$.

Starting from a node $v \in V_L$ we run a local Dijkstra search (to solve the *single source shortest path problem*) within a distance of maximal three tiles from $v$. $CA, \ldots, CE$ are five tiles at a third column left of the sweep line and with a vertical distance of at most two grid tiles from $v$. $C1, \ldots, C5$ are five tiles at a third column right of the sweep line and with a vertical distance of at most two grid tiles from $v$. The local Dijkstra search terminates if all nodes of $V_{CA}, \ldots, V_{CE}$ and $V_{C1}, \ldots V_{C5}$ are reached.

For each node $v \in V_L$ on the sweep line $L$ we perform such a Dijkstra search. Then we consider all pairs of boundary nodes $(u_1, u_2)$, where $u_1$ is on the boundary of a tile on the left and $u_2$ is on the boundary of a tile on the right and the vertical distance between those tiles is at most four. We iterate over all potential access nodes $v \in V_L$ on the sweep line $L$ and compute the minimum of the costs of the shortest paths from $u_1$ to $u_2$ via the node $v$ by:

$$\delta(u_1, u_2) = \min_{v \in V_L} \delta(u_1, v) + \delta(v, u_2) \qquad (10)$$

The Dijkstra search starting from $v \in V_L$ computes only the costs starting from $v$. Since $\delta(u_1, v) = \delta(v, u_1)$, it is sufficient to perform just one Dijkstra search from $v \in V_L$. However in a directed graph is in general $\delta(u_1, v) \neq \delta(v, u_1)$. In this case we have also to perform a backward search from $v$, in order to compute $\delta(u_1, v)$.

In order to avoid the backward search we can use the following observation. Each node $v \in V_L$ on the sweep line $L$ is also a node of a tile $R$ three columns left (and also right) of the sweep line. Using the results of the left and right neighbouring sweep lines we get $\delta(u_1, v)$ without a backward search. This requires a higher memory consumption to store the results of two additional sweep lines.

Then we determine the set of access nodes $v \in V_L$ for which $\delta(u_1, v) + \delta(v, u_2)$ is minimal. With this set of access nodes we associate the tiles corresponding to $u_1$ and $u_2$, respectively.

Approach Variants

In the advanced approach, we used a ring of tiles (e.g. two rows and two columns defining a rectilinear/square ring) around R to define the inner area $\overline{R}$, which consists of $5 \times 5 = 25$ tiles. To define the outer area $\hat{R}$ we used again a ring of tiles around the inner area $\overline{R}$. Therefore $\hat{R}$ consists of $9 \times 9 = 81$ tiles.

However the size of $\overline{R}$ respectively $\hat{R}$ determines the local search space on level l until to the ascent of the next level l + 1. In order to reduce the search space we can use only one row around R instead of two rings to define $\overline{R}$, which consists then of $3 \times 3 = 9$. Likewise we can use only one row around $\overline{R}$ to define $\hat{R}$, which consists then of $5 \times 5 = 25$. This will reduce the search space of the local search considerably. However the number of access nodes will increase.

On the other hand we can use more than two rings around R respectively $\overline{R}$ to define $\overline{R}$ and $\hat{R}$. This will reduce the number of access nodes, but at the cost of a larger local search space. So we have to trade-off the number of access nodes against the size of the local search space. It seems that one or two rings are a good compromise between both objectives.

Generation of the Higher Level Network

To compute distance tables for access nodes, we use the access nodes as node set $V_{l+1}$ for the next higher-level l + 1. The edges $E_{l+1}$ of the level l + 1 are shortest routes on the lower-level l. Thereby we do not need to store all the shortest routes between all pairs of nodes $v, w \in V_{l+1}$. It is sufficient to consider only shortest routes to the nearest nodes of $V_{l+1}$. They are in general only one tile away from the node.

For the computation of the shortest routes we use the searches which we used to determine the access nodes. So no additional route computations are necessary. Therefore any of the above-described methods of determining access nodes (i.e. the advanced approach or the line sweep approach) could be used. However, if the above-described simple approach is used, we have to compute an additional local search around each access node.

If we use the *sweep-line algorithm* or any other advanced approach method described above, we already computed a single source shortest path query starting from any node $v \in V_{l+1}$. The query is executed least two tiles from v. However already after one tile we will reach the next node $w \in V_{l+1}$. So it is sufficient to consider only a part of the search result.

Between two nodes $v, we\ V_{l+1}$ we insert an (artificial) edge $e \in E_{l+1}$. If there exists a shortest path between v and w which does not contain any other node $u \in V_{l+1}$, $u \neq v, w$, then the cost $\gamma_{l+1}(e) \in C$ of e is defined as $\gamma_{l+1}(e) := \delta_l(v, w)$.

The Shortest Path Query

At first, we determine the access nodes $A_l(s)$, l = 0, ... , k - 1 for the start node $s \in V$ for each level. Accordingly we determine the access nodes $A_l(t)$, l = 0, ... , k - 1 for the destination node $t \in V$ for each level. If we distinguish between ascending and descending access nodes we use the ascending access nodes $\vec{A}_l(s)$ for the start node and the descending access nodes $\overleftarrow{A}_l(t)$ for the destination node.

Now some additional notations are introduced. Since there are no access nodes defined for the highest level k we set $A_k(V_k) := \emptyset$ (respectively $\vec{A}_k(V_k) := \overleftarrow{A}_k(V_k) := \emptyset$). Furthermore for a node $v \in V$ we denote with $R_l(v)$ the rectangular tile of level l which contains v. (The rectangular tile may be uniquely determined, if we consider all tiles as semi open tiles, that means a tile contains always e. g. a north and a west boundary). Further, $\overline{R}_l(v)$ is the $5 \times 5$ tile with $R_l(v)$ in the centre. Accordingly $\hat{R}_l(v)$ is the $9 \times 9$ tile with $R_l(v)$ in the centre. The size of the tile depends on the number of rings around the centre tile. For example, if we were to use only one row around the centre tile, then $\overline{R}_l(v)$ would be a $3 \times 3$ tile.

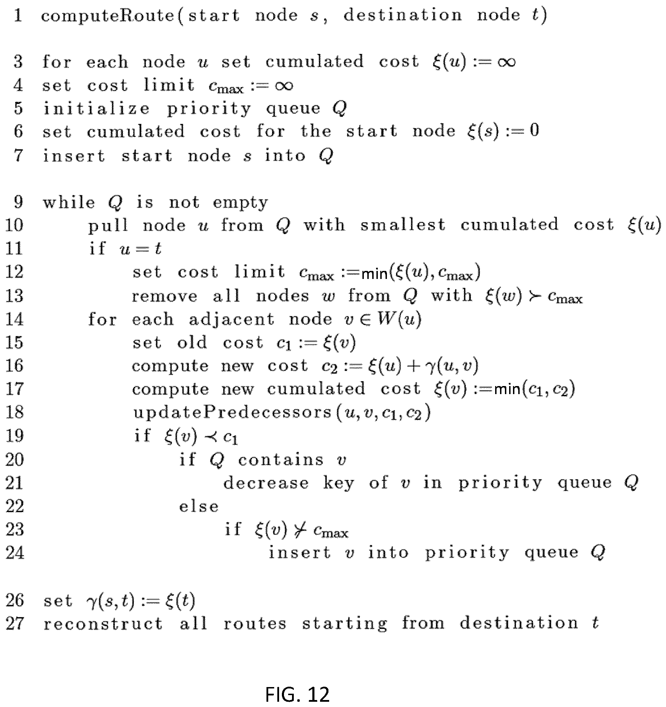

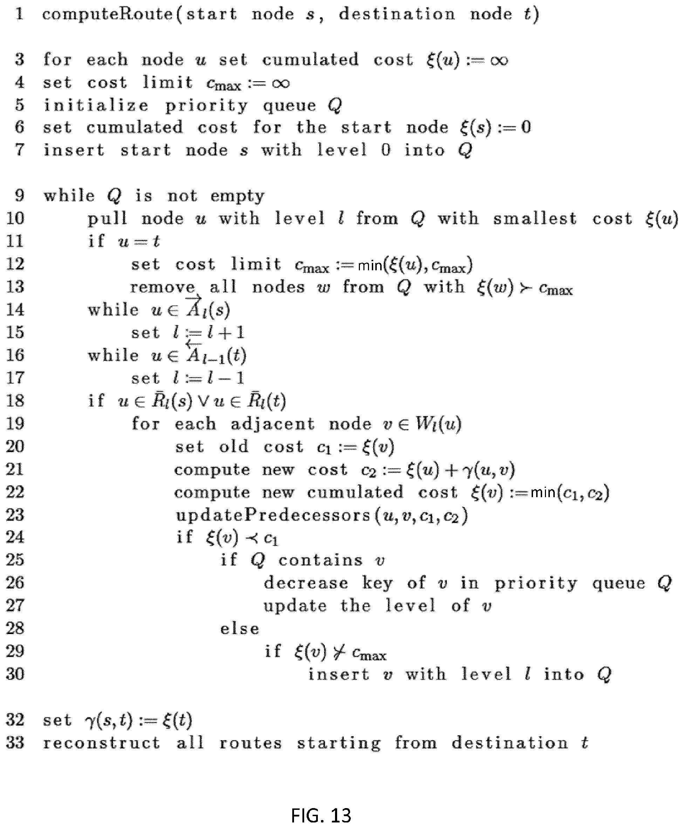

The pseudocode of the query algorithm is shown in Figure 13. By way of comparison Figure 12 shows the original pseudocode of a method of simultaneous routing. The main difference is that we have to store to each node the according level. However the priority queue is still ordered only by the tentative cumulated cost $\xi$. Therefore the level has no impact to the order of the priority queue.

A node has at most one associated level. In few cases it is possible that the level of a node changes if a node is visited again. Therefore we have to update the level - see Figure 13 Line 27 (alternatively it is possible to insert a copy of the node with the other level into the priority queue Q). However in most cases the level of a node does not change during the route search.

A container data structure may be provided to store each access node together with the cumulated cost $\xi$ and other additional data. This container can also to store the level information.

At the begin of the algorithm we insert the start node at level 0 (see Figure 13 Line 7). After pulling a node u from the priority Q we have to check, if we have to enter a new level (see Figure 13 Lines 14-17). Thereby we ascent to a higher level if we reach an ascending access node $a \in \vec{A}_l(s)$ of the start node s. Accordingly we descend to a lower level if we reach a descending access node $a \in \overleftarrow{A}_l(t)$ of the destination node t.

With the condition in Line 18 of Figure 13, we exclude all nodes from the further search, which are outside of the rectangular tile $\overline{R}_l(s)$ of size $5 \times 5$ of the current level l around the start node s respectively of the $5 \times 5$ tile $\overline{R}_l(t)$ of the

destination node $t$. Advantageously, this may reduce the search space significantly.

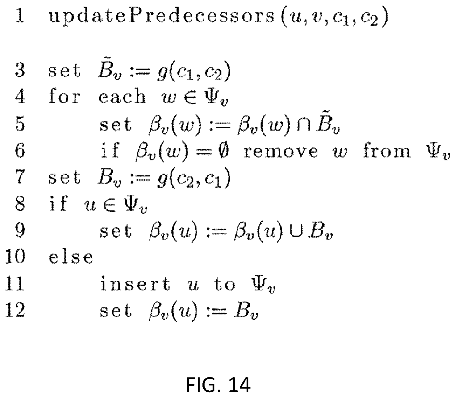

The UPDATE PREDECESORS method in Line 23 of Figure 13, is the same as that for a routing method of Figure 12, and is shown in Figure 14. However, the set $U(v)$ contains the predecessors of $v$ for all levels.

Using the well-defined access nodes, it is possible to prove that the shortest path query computes always the optimal routes.

Instead of the described unidirectional shortest path query, it is possible to use a bidirectional approach.

Road Classification

We have seen in the above-mentioned 'Generation of the Higher Level Network' section that we have to compute complete road networks for higher levels. The different levels of road networks imply a classification of the roads. In the 'Generation of the Higher Level Network' section, we introduced the edges $E_l$ of the higher levels $l = 1, \ldots, k$ as abstract objects. To each edge $e = (u,v) \in E_l$ we assigned the cost $\gamma_l(e)$ which is the minimum of the costs all shortest paths $p \in \hat{P}_{l-1}(u,v)$ on level $l- 1$:

$$\gamma_l(e) := \delta_{l-1}(u,v) = \min_{p \in \hat{P}_{l-1}(u,v)} \gamma_{l-1}(p) \qquad (11)$$

Now we define a relation between edges of different levels. We call an edge $e_l \in E_l$ a *part* of an edge $e_{l+1} = (u, v) \in E_{l+1}$ ($l = 0, \ldots, k- 1$), if $e_l$ is a sub-path of a shortest path between $u$ and $v$. For a part of an edge we use the same symbol $\dashv$ like for a sub-path.

$$e_l \dashv e_{l+1} :\Leftrightarrow \bigvee_{p \in \hat{P}_{l-1}(u,v)} (e_l \dashv p) \qquad (12)$$

We extend the definition to edges $e_i$, $e_j$ of non-adjacent levels $0 \le i < j \le k$ by the transitive hull:

$$e_l \dashv e_j :\Leftrightarrow \bigvee_{e_{i+1} \in E_{i+1}, \ldots, e_{j-1} \in E_{j-1}} (e_i \dashv e_{i+1} \dashv \ldots \dashv e_{j-1} \dashv e_j) \qquad (13)$$

Additionally we define that each edge $e \in E_l$ is a part of itself ($e \dashv e$).

Now we associate each level ($l = 0, \ldots, k$) with a road class. So we get $k+ 1$ different road classes. To an edge $e \in E$ we associate the road class which corresponds to the highest-level $l$ for which an edge $e_l \in E_l$ exist, so that $e \dashv e_l$.

This road classification reflects the importance of the roads for the route calculation. Therefore it is useful also for routing methods which use traditional heuristic approaches. The road classification depends from the routing criteria which we used. So for each routing criterion (travel time, travel distance,...) one can compute a separate road classification. However we can combine all these road classifications to one classification, just by taking for each edge the highest road class of all criteria.

Such a road classification is useful also for other applications like map display. In this case we can also use other criteria, which are usually not useful for routing purposes. Such a criterion is e. g. the density of floating car data, also referred to as probe data. A route computation based on the probe density as such is hardly meaningful. However we can use this criterion (or in combination with other criteria) to compute a road classification which reflects the usage by the community. Thereby the method is robust against variations of probe coverage. In contrary to other road classification methods thereby no calibration of density data is necessary.

A general advantage of this road classification method is that, for each road class, we always get a connected road network.

Memory Consumption

An important question for each routing method is the additional memory consumption. In order to improve the computation time of the Dijkstra algorithm significantly the storage of additional data is necessary. If we would have enough memory we could pre-compute all routes and store the results. Then a shortest path query needs only one table access. However even for small road networks it is not possible to store so much data.

On the other hand the classical Dijkstra algorithm does not need any additional memory. However it is too slow for many commercial applications. Therefore a trade-off between both contrary objectives is necessary.

In our approach we have to store the access nodes of each tile and the networks of higher levels. However we can avoid storing the access nodes of each tile by computing the access nodes during the shortest path query. First we select all candidates for (ascending) access nodes of level /of the tile $R(s) \in \Re_l$ containing the start node $s$. These are all road elements which cross the boundary of the extended tile $\overline{R}(s)$. Then we select those candidates which are contained in the node set $V_{l+1}$ of the next level. Accordingly we compute the (descending) access nodes of level /of the tile $R(t) \in \Re_l$ containing the destination node $t$.

Moreover many data formats for road networks (like NDS) contain already different levels of the road network. If it's possible to replace the existing hierarchy of road networks by our computed hierarchy, hardly any additional space is necessary

<u>Notation</u>

The following notation is used in the preset description:

$G = (V, E)$ Graph with the node set $V$ and the edge set $E$. In general we use directed graphs, that means the edges are pairs of nodes ($E \subseteq V \times V$).

$n := |V|$ The number of nodes of the graph $G = (V, E)$.

$m := |E|$ The number of edges of the graph $G = (V, E)$.

$G_l = (V_l, E_l)$ Graph of the level $l = 0, ..., k$. The graph of level 0 is the whole graph $G = G_0$.

$U_l(v) := \{u \in V_l : (u, v) \in E_l\}$ The set of all predecessors of the node $v \in V_l$ on level /. $W_l(v) := \{w \in V_l : (v, w) \in E_l\}$ The set of all successors of the node $v$ $v \in V_l$ on level /.

$$U(v) := \bigcup_{l=0}^{k} U_l(v)$$

The set of all predecessors of the node $v \in V_l$ on level /

$$W(v) := \bigcup_{l=0}^{k} W_l(v)$$

The set of all successors of the node $v$.

$p = (u_0, u_1), ..., (u_{h-1}, u_h)$ A path $p$ in $G$ from a node $u_0$ to a node $u_h$. $\tilde{p} \dashv p$ A sub-path $\tilde{p}$ of $p$. $e \dashv p$ An edge $e \in E$, which is contained in the path $p$.

$P(s, t)$ The set of all paths between $s, t \in V$.

$$P := \bigcup_{(s,t) \in V \times V} P(s, t)$$

The set of all paths in $G$.

$\hat{P}(s, t) := \{\hat{p} \in P(s, t) : \delta(s, t) < \min\{\gamma(p) : p \in P(s, t) \wedge \gamma(p) \neq \gamma(\hat{p})\}\}$ The set of all shortest paths between $s, t \in V$.

$P_l(u, v)$ The set of all paths in $G_l$ between $u, v \in V_l$.

$$P_l := \bigcup_{(u,v) \in V_l \times V_l} P(s, t)$$

The set of all paths in $G_l$.

$\hat{P}_l(u, v) := \{\hat{p} \in P_l(u, v) : \delta(u, v) < \min\{\gamma(p) : p \in P_l(u, v) \wedge \gamma(p) \neq \gamma(\hat{p})\}\}$ The set of all shortest paths between $u, v \in V_l$.

C is the codomain of the cost function (usually $C = \mathbb{R}_+$).

$\gamma: E \to C$ Cost function for edges.

$\gamma: P \to C$ Extension of the cost function to paths. For a path $p = (u_0, ..., u_h) \in P(u_0, u_h)$ we define

$$\gamma(p) := \sum_{i=1}^{h} \gamma(u_{i-1}, u_i)$$

$\delta: V \times V \to C$ Extension of the cost function $\gamma$ to all pairs of nodes. For $s, t \in V$ we define $\delta(s, t) := \min_{p \in P(s,t)} \gamma(p)$.

$\gamma_l: E_l \to C$ Cost function for edges on level $l$.

$\gamma_l: P_l \to C$ Extension of the cost function to paths on level $l$. For a path $p = (u_0, ..$

$., u_h) \in P_l(u_0, u_h)$ we define $\gamma_l(p) := \sum_{i=1}^{h} \gamma_l(u_{i-1}, u_i)$ .

$\delta_l: V_l \times V_l \to C$ Extension of the cost function $\gamma_l$ to all pairs of nodes on level $l$. For $u, v \in V$ we define $\delta(u, v) := \min_{p \in P_{l(u,v)}} \gamma(p)$

$\xi: V \to C$ $\xi(v)$ is the tentative cumulative cost from the start node $s$ to the node $v \in V$.

$\Psi_V \subseteq U(v)$ The tentative set of predecessors of the node $v \in V$. That means for each $u \in \Psi_V$ there is a (tentative) shortest path between the start node $s$ and $v$ over $u$. The sets $\Psi_V$ changes during the shortest path search.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components), i.e. so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter (for example: a first area, a node, an edge), or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A computer-implemented method to determine a sub-graph of a graph consisting of nodes and edges, wherein the graph is representative of a digital map of segments of navigable elements of a network of navigable elements in a geographical region, the method comprising:

defining a plurality of triples of lines, wherein for each of the triples of lines a second line is between a first line and a third line;

calculating, for each triple of lines, minimum cost paths between nodes or edges intersecting the first line and nodes or edges intersecting the third line;

determining access nodes or edges for each triple of lines based on nodes or edges intersecting the second line of the triple which are part of any of the calculated minimum cost paths between the first and third line of the triple;

calculating minimum cost paths between the access nodes or edges of each of the plurality of triples of lines; and determining the sub-graph based at least in part on collecting each of the nodes and edges which are part of any of the calculated minimum cost paths between the access nodes or edges.

2. The method of claim 1 , wherein the triples of lines are part of a pre-defined grid partitioning the graph into a plurality of cells comprising nodes and edges; and for each cell, determined at least partially by the first line of a corresponding triple of lines, defining:

an inner ring, comprising nodes and edges, around the cell and associated with the second line of the corresponding triple of lines;

an outer ring, comprising nodes and edges, around the inner ring of the cell and associated with the third line of the corresponding triple of lines.

3. The method of any of claims 1 to 2, wherein calculating the minimum cost paths is based at least in part on a cost function involving a cost parameter; and optionally:

wherein the cost parameter is based at least in part on one or more of the following:

traversal distance;
traversal time;
energy consumption;
scenic value; and
toll costs.

4. A method to calculate a route from a start point to a destination point, the method comprising:

using, for a part of the route to be calculated that is outside a first distance from the start point and outside a second distance from the destination point, the sub-graph determined by any of previous claims 1 to 3; and

using, for a part of the route to be calculated that is inside the first distance from the start point or inside the second distance from the destination point, the graph.

5. A method to calculate a route from a start point to a destination point on a graph of nodes and edges comprising:

using nodes and/or edges of the graph to calculate a part of the route that is between the start point and the inner ring around a cell of the graph in which the start point is located or between the destination point and the inner ring around a cell of the graph in which the destination point is located, and

using nodes and/or edges of the sub-graph as determined in claims 1 to 3 to calculate another part of the route.

6. A method to determine a plurality of sub-graphs of a graph based on a plurality of pluralities of triples of lines by the method of any of the claims 1 to 3.

7. The method of claim 6, wherein the determined plurality of sub-graphs constitute a hierarchy of sub-graphs.

8. A method to calculate a route from a start point to a destination point on a graph of nodes and edges with a hierarchy of levels of sub-graphs determined by the method of claim 7, the method comprising:

using the sub-graph of a first level to calculate a part of the route that is:

outside of an inner ring around a cell, of the sub-graph of the first level, in which the start point or the destination point is located; and

inside of an inner ring around a cell, of a sub-graph of a higher level, in which the start point or the destination point is located.

9. A method to render a graph or a road map, the method comprising:

displaying only nodes and edges which belong to selected one or more sub-graphs determined by the method of claim 6; or

displaying nodes and edges, which belong to selected one or more sub-graphs determined by the method of claim 6 in different styles, depending on the sub-graph to which they belong.

10. A method to determine a classification of nodes and/or edges of a graph, the method comprising:
determining nodes and/or edges as belonging to the same class if they are part of the same sub-graph of the plurality of sub-graphs determined by the method of claim 6.

11. A method to calculate a route from a start point to a destination point on a graph of nodes and edges with a classification of nodes and/or edges determined by the method of claim 10, the method comprising:
using nodes and/or edges of the class associated with the sub-graph of the first level to calculate a part of the route that is:

outside of an inner ring around a cell of the sub-graph of the first level in which the start point or the destination point is located, and

inside of an inner ring around a cell of a sub-graph of a higher level in which the start point or the destination point is located.

12. A method to render a graph or a road map, the method comprising:

displaying only nodes and edges which belong to selected one or more classes determined by the method of claim 10, or

displaying nodes and edges, which belong to selected one or more classes determined by the method of claim 10, in different styles, depending on the class to which they belong.

13. An apparatus comprising means for performing the method of any of the previous claims.

14. A computer program comprising instructions which, when the program is executed by a computer, cause the computer to carry out the method of any of claims 1 to 12.

15. A computer-readable medium comprising instructions which, when executed by a computer, cause the computer to carry out the method of any of claims 1 to 12.

100

100'

FIG. 1

100

200

200₁

FIG. 2

300

| 301 – Define first area $(R_1)$ of base digital map |
| 302 – Define second area $(\bar{R}_1)$ of base digital map |
| 303 – Define third area $(\hat{R}_1)$ of base digital map |
| 304 – Determine first set of elements $(V_{R_1})$ |
| 305 – Determine second set of elements $(V_{\bar{R}_1})$ |
| 306 – Determine second set of elements $(V_{\hat{R}_1})$ |
| 307 – Determine set of minimum cost paths between elements of the first set of elements $(V_{R_1})$ and elements of second set of elements $(V_{\hat{R}_1})$ |
| 308 – Determine set of access elements $(A_{R_1})$ for the first area |
| 309 – Generate map data based on set of access elements $(A_{R_1})$ for the first area |

FIG. 3

FIG. 4

FIG. 5

FIG. 6

FIG. 7

FIG. 8

900

901 – partition graph into plurality of cells ($R_1$)

902 – define inner ring ($\bar{R}_1$) around each cell

903 – defining outer ring ($\hat{R}_1$) around inner ring of each cell

904 – calculate minimum cost paths between boundary nodes or edges of each cell and boundary nodes or edges of outer ring

905 – determine access nodes or edges ($A_{R_1}$) based on boundary nodes or edges of inner ring which are part of any calculated minimum cost paths for respective cell

906 – calculate minimum cost paths between access nodes or edges of each of the plurality of cells

907 – determine sub-graph based on collecting each of the nodes and edges which are part of any of the calculated minimum cost paths between the access nodes or edges

FIG. 9

10

PROCESSOR 12

15

11

MEMORY 13

14

FIG. 10

20

MEMORY 13

14

FIG. 11

```
computeRoute(start node s, destination node t)

for each node u set cumulated cost ξ(u) := ∞
set cost limit c_max := ∞
initialize priority queue Q
set cumulated cost for the start node ξ(s) := 0
insert start node s into Q

while Q is not empty
    pull node u from Q with smallest cumulated cost ξ(u)
    if u = t
        set cost limit c_max := min(ξ(u), c_max)
        remove all nodes w from Q with ξ(w) ≻ c_max
    for each adjacent node v ∈ W(u)
        set old cost c_1 := ξ(v)
        compute new cost c_2 := ξ(u) + γ(u,v)
        compute new cumulated cost ξ(v) := min(c_1, c_2)
        updatePredecessors(u, v, c_1, c_2)
        if ξ(v) ≺ c_1
            if Q contains v
                decrease key of v in priority queue Q
            else
                if ξ(v) ⊁ c_max
                    insert v into priority queue Q

set γ(s,t) := ξ(t)
reconstruct all routes starting from destination t
```

FIG. 12

```
computeRoute(start node s, destination node t)

for each node u set cumulated cost ξ(u) := ∞
set cost limit c_max := ∞
initialize priority queue Q
set cumulated cost for the start node ξ(s) := 0
insert start node s with level 0 into Q

while Q is not empty
    pull node u with level l from Q with smallest cost ξ(u)
    if u = t
        set cost limit c_max := min(ξ(u), c_max)
        remove all nodes w from Q with ξ(w) ≻ c_max
    while u ∈ Ā_l(s)
        set l := l + 1
    while u ∈ Ā_{l-1}(t)
        set l := l - 1
    if u ∈ R̄_l(s) ∨ u ∈ R̄_l(t)
        for each adjacent node v ∈ W_l(u)
            set old cost c_1 := ξ(v)
            compute new cost c_2 := ξ(u) + γ(u, v)
            compute new cumulated cost ξ(v) := min(c_1, c_2)
            updatePredecessors(u, v, c_1, c_2)
            if ξ(v) ≺ c_1
                if Q contains v
                    decrease key of v in priority queue Q
                    update the level of v
                else
                    if ξ(v) ⊁ c_max
                        insert v with level l into Q

set γ(s, t) := ξ(t)
reconstruct all routes starting from destination t
```

FIG. 13

```
1   updatePredecessors (u, v, c₁, c₂)

3   set  B̃ᵥ := g(c₁, c₂)
4   for  each  w ∈ Ψᵥ
5        set  βᵥ(w) := βᵥ(w) ∩ B̃ᵥ
6        if  βᵥ(w) = ∅  remove  w  from  Ψᵥ
7   set  Bᵥ := g(c₂, c₁)
8   if  u ∈ Ψᵥ
9        set  βᵥ(u) := βᵥ(u) ∪ Bᵥ
10  else
11       insert  u  to  Ψᵥ
12       set  βᵥ(u) := Bᵥ
```

FIG. 14

Europäisches
Patentamt

European
Patent Office

Office européen
des brevets

## EUROPEAN SEARCH REPORT

**Application Number**

EP 24 20 7642

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/040931 A1 (BAST HOLGER [DE] ET AL) 12 February 2009 (2009-02-12) * paragraphs [0055] - [0084] * * figures 3, 4, 5 * | 1-15 | INV. G01C21/34 G01C21/00 |
| A | AHMADIAN SARA ET AL: "Extracting Small Subgraphs in Road Networks", PROCEEDINGS OF THE 2023 SECURE AND TRUSTWORTHY DEEP LEARNING SYSTEMS WORKSHOP, ACMPUB27, NEW YORK, NY, USA, 13 May 2024 (2024-05-13), pages 493-502, XP059594887, DOI: 10.1145/3589334.3645415 ISBN: 979-8-4007-0217-4 * abstract * | 1-15 | |

**TECHNICAL FIELDS SEARCHED (IPC)**

G01C

The present search report has been drawn up for all claims

| Place of search | Date of completion of the search | Examiner |
|---|---|---|
| The Hague | 21 March 2025 | Zimmermann, Katrin |

EPO FORM 1503 03.82 (P04C01)

## ANNEX TO THE EUROPEAN SEARCH REPORT
## ON EUROPEAN PATENT APPLICATION NO.

EP 24 20 7642

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | Publication date | Patent family member(s) | Publication date |
|---|---|---|---|
| US 2009040931 A1 | 12-02-2009 | NONE | |

EPO FORM P0459

For more details about this annex : see Official Journal of the European Patent Office, No. 12/82